# EUROPÄISCHE PATENTSCHRIFT

(11) **EP 3 774 198 B1**
(45) Veröffentlichungstag und Bekanntmachung des Hinweises auf die Patenterteilung: **19.01.2022**
(21) Anmeldenummer: 19723626.8
(22) Anmeldetag: 02.04.2019
(51) Int. Cl.: B25J 9/16, B25J 13/08, B25J 15/02, B25J 19/06, B21D 43/10

(54) **VORRICHTUNG UND VERFAHREN ZUR ÜBERWACHUNG VON RELATIVBEWEGUNGEN**
DEVICE AND METHOD FOR MONITORING RELATIVE MOVEMENTS
DISPOSITIF ET PROCÉDÉ SERVANT À SURVEILLER DES DÉPLACEMENTS RELATIFS

(30) Priorität: 04.04.2018 AT 502732018
(43) Veröffentlichungstag der Anmeldung: 17.02.2021
(73) Patentinhaber: TRUMPF Maschinen Austria GmbH & Co. KG., 4061 Pasching (AT)
(72) Erfinder: SECIBOVIC, Kabir, 4623 Gunskirchen (AT)
(74) Vertreter: Burger, Hannes
(86) Internationale Anmeldenummer: PCT/AT2019/060110
(87) Internationale Veröffentlichungsnummer: WO 2019/191794

(56) Entgegenhaltungen:
- DE-A1-102016 000 565
- DE-A1-102016 206 980
- JP-A- 2002 166 383

## Beschreibung

Die Erfindung betrifft eine Vorrichtung und ein Verfahren zur überwachten Bewegung von Objekten, bevorzugt Blechen. Die Greifvorrichtung und das Verfahren in welchem die Greifvorrichtung eingesetzt wird, umfassen einen an einem Greifmodul angeordneten Sensor, welche eine Relativbewegung und/oder Relativgeschwindigkeit des zu bewegenden Objekts relativ zur Greifvorrichtung erkennen kann und geeignete Gegenmaßnahmen einleiten kann.

Die Erfindung betrifft ferner ein Sicherungsmittel, welches als Teil der Greifvorrichtung dazu ausgebildet ist, im Bedarfsfalle eine Aktivstellung einzunehmen, bei der zu einer Haltekraft eine zusätzliche Sicherungskraft auf das zu bewegende Objekt aufgebracht werden kann.

In der Umformtechnik wurden in den letzten Jahren vielfältige Anstrengungen unternommen um die Zugabe, Manipulation und/oder Entnahme von umzuformenden Teilen schneller und auch sicherer für den Prozess und die eingebundenen Personen, wie etwa einen Anlagenbediener, zu machen. Für einige Anwendungen bei denen häufig monotone bzw. sich oftmals wiederholende Aufgaben ausgeführt werden müssen hat sich der Einsatz von automatisierten Anlagen bzw. Robotersystemen durchgesetzt. Ebenso ist es aus ergonomischer Sicht sinnvoll sehr schwere und/oder scharfkantige Objekte durch Greifvorrichtungen bewegen zu lassen, anstatt ein Verletzungsrisiko eines Anlagenbedieners in Kauf zu nehmen.

Dem Fachmann sind etliche Arten von Roboter- und/oder damit verbundene Greifvorrichtungen bekannt, welche mit Umform-/Bearbeitungsanlagen und dergleichen automatisiert kooperieren, und welche zur Überwachung und Steuerung der einzelnen Anlagenkomponenten mit einer Anlagensteuerung verbunden sind.

Die DE 102016206980 A1 offenbart eine Handhabungsvorrichtung in Form eines Roboters mit zwei Backen zum Einklemmen eines Körpers. Auf den Innenseiten der Backen sind taktile Sensoren angeordnet. Die taktilen Sensoren können jeweils mit einem elastischen, insbesondere auch rutschfesten Belag versehen sein, um das Greifen eines Körpers zu erleichtern. Mit den taktilen Sensoren kann während der Handhabung des Körpers die Druckverteilung bzw. Veränderungen der Druckverteilung registriert werden. Diese können beispielsweise durch ein Herausrutschen des Körpers aus der Aufnahmevorrichtung oder durch Kollision der Aufnahmevorrichtung oder des Körpers mit einem Hindernis entstehen.

Die JP 2002166383 A offenbart für einen Roboter ein System, mit dem ein Verrutschen eines Objektes in einem Greifer detektiert werden kann. Zu diesem Zweck sind an dem Greifmechanismus Drucksensoren, Vibrationssensoren, akkustoische Sensoren und Beschleunigungssensoren vorgesehen. An den Greifarmen ist jeweils ein Expansionskörper angeordent.

Die DE 102016000565 A1 offenbart ein Robotersystem mit einem Intrusionserfasser, der erfasst, dass eine Person in einen um einen Roboter aufgebauten Überwachungsbereich eingedrungen ist. Die Steuervorrichtung bewirkt, dass eine Lichtemissionsvorrichtung Licht emittiert, wenn erfasst wird, dass die Person in den Überwachungsbereich eingedrungen ist.

Speziell in der Blechumformung kommen zur Bewegung der Bleche oftmals Sauggreifer zum Einsatz um das umformende Blech aufzugreifen und zum Bestimmungsort zu transportieren. Die DE 102006025387 B3 stellt beispielsweise ein Verfahren zum überwachten Transport von Blechen vor, bei dem die Erkennung von ungewollten Doppelblechen durch Sensoren ermöglicht wird. Allerdings setzt die Anwendung von Sauggreifern eine Mindestangriffsfläche für einen Saugkopf voraus und erfordert saubere Oberflächen. Außerdem ist die Verwendung von Sauggreifern für hohe Greif- und Bewegungsgeschwindigkeiten nur bedingt geeignet. Aus diesem Grunde kommen heutzutage vermehrt Zangengreifer zum Einsatz, welche kleinere Angriffsflächen ermöglichen und zudem vielfältigere Bewegungsabläufe ermöglichen. Überdies kann die Geschwindigkeit der Greif- und/oder Verfahrbewegungen durch den Einsatz von Greifmodulen, welche zumindest zwei Greifbacken aufweisen, gesteigert werden. Hierbei kann jedoch die Gefahr auftreten, dass ein Objekt, wie etwa ein Blech und/oder Blechteil, durch die schnellen Bewegungen der Greifvorrichtung innerhalb dieser verrutschen kann und im schlimmsten Fall sogar aus der Greifvorrichtung herausgeschleudert wird.

Üblicherweise wird ein automatisiertes Bearbeitungszentrum, wie etwa eine Biegemaschine mit zugeordnetem Manipulator für zu bewegende Teile bzw. Objekte, innerhalb eines Schutzzaunes betrieben, welcher ein unbeabsichtigtes Eintreten von Fremdkörpern, insbesondere Personen, innerhalb des Bearbeitungsbereichs verhindern soll. Außerdem kann eine Schutzzaunanordnung bzw. Einhausung dazu dienen ein aus der Greifvorrichtung "herausgeschleudertes" Objekt abzufangen und somit die Sicherheit im umzäunten Bearbeitungsbereich sicher zu stellen. Durch die Schutzzäune umgrenzte Bearbeitungsbereiche müssen oftmals aufwändig an mehreren Stellen abgesichert sein, um einen zeitweise erforderlichen Zugang in den Bearbeitungsbereich zu ermöglichen. Dies kann erforderlich sein, um z.B. eine Bereitstellung von Rohmaterial oder Halbzeug an einer Entnahme für die Greifvorrichtung, oder analog dazu den Abtransport von bearbeiteten Objekten bzw. Teilen von einer Ablage, zu ermöglichen. Ein Schutzzaun stellt dahingehend einen ablauftechnischen Nachteil dar. Des Weiteren ist die Errichtung eines Schutzzauns mit Zeit- und Kostenaufwand für die Errichtung verbunden. Bei einem Umzug eines Bearbeitungszentrums, zumindest bestehend aus einer Greifvorrichtung, einem Manipulator und einer Bearbeitungsmaschine, muss jedes Mal der Schutzzaun neu er- und eingerichtet werden.

Aufgabe der vorliegenden Erfindung war es, die Nachteile des Standes der Technik zu überwinden und eine kostengünstige Vorrichtung und ein Verfahren zur Verfügung zu stellen, mittels derer eine einfache Erkennung von unerwünschten Relativbewegungen und/oder Relativgeschwindigkeiten von zu bewegenden Objekten innerhalb einer Greifvorrichtung während vorgebbarer Bewegungsabläufe ermöglicht wird. Damit verbunden ist die Aufgabe, im Bedarfsfall geeignete Gegenmaßnahmen an der Greifvorrichtung und/oder damit verbundener Komponenten einer Umformanlage einzuleiten. Ferner stellt sich die Aufgabe Sicherheit und/oder Qualität der Bearbeitungsanlage bzw. seiner Peripherie, und somit auch für Personen, zu erhöhen und unter anderem Betriebs-, Stillstands-, Reparatur- und/oder Materialkosten, einzusparen und auf aufwändige Schutzzäune verzichten zu können.

Diese Aufgabe wird durch eine Vorrichtung und ein Verfahren gemäß den Ansprüchen gelöst. Die erfindungsgemäße Greifvorrichtung zur überwachten Bewegung von Objekten, bevorzugt Blechen, umfasst eine Anlagensteuerung, welche zur Verarbeitung von Objektdaten und Steuerung eines Greifmoduls und/oder weiterer Anlagenkomponenten ausgebildet ist. Das Greifmodul weist zumindest zwei miteinander kooperierend ausgebildete Greifbacken auf welche einen dazwischenliegenden Aufnahmeraum zur Aufnahme von zumindest Teilen eines zu überwachenden und transportierenden Objekts, insbesondere eines Blechteils, bilden. Die Greifbacken des Greifmoduls sind derart ausgebildet, dass durch Aufbringen einer vorgebbaren Klemmkraft zumindest eine reibschlüssige Verbindung zwischen den Greifbacken und zumindest Teilen des Objekts ermöglicht wird, wodurch das Objekt bewegbar, also ergreif- und transportierbar ist. Weiters umfasst die Greifvorrichtung zumindest ein Sensorelement zur Erfassung der Objektdaten des zu bewegenden und überwachenden Objekts. Unter Objektdaten können neben Orts- und/oder Lageinformationen, also Positionsdaten, relativ zur Sensoranordnung, auch eine Objektgeschwindigkeit gemeint sein. Das zumindest eine Sensorelement ist dabei an zumindest einer Greifbacke mit seinem Sensorbereich dem Aufnahmeraum zugewandt angeordnet und derart ausgebildet, dass durch zumindest zeitweilige Erfassung der Objektdaten eine Relativgeschwindigkeit des Objekts bezüglich zumindest einer der Greifbacken delektiert wird.

Das erfindungsgemäße Verfahren zur überwachten Bewegung von Objekten, bevorzugt Blechen, umfasst daher die Verfahrensschritte:
- Bereitstellen einer oben beschriebenen erfindungsgemäßen Greifvorrichtung
- Bereitstellen zumindest des zu bewegenden Objekts;
- Greifen des zu bewegenden Objekts mittels Greifbacken der Greifvorrichtung;
- Bewegung des Objekts entsprechend eines vorgebbaren Bewegungsablaufs, wobei eine Erfassung von Bewegungsdaten der Greifvorrichtung erfolgt und eine zumindest periodische Auswertung der Bewegungsdaten von einer Anlagensteuerung erfolgt und
- eine Erfassung von Objektdaten des ergriffenen und bewegten Objekts mittels zumindest eines Sensorelements erfolgt und eine zumindest periodische Auswertung der Objektdaten in der Anlagensteuerung erfolgt; und
- ein zumindest periodischer Abgleich der Objektdaten mit den Bewegungsdaten dazu genutzt wird eine etwaige Abweichung, welcher einer Relativgeschwindigkeit und/oder Relativbewegung des zu bewegenden Objekts relativ zu zumindest einer der Greifbacken entspricht, zu detektieren und wobei
- keine Abweichung einem Normalbetrieb entspricht und der vorgegebene Bewegungsablauf beendet wird; oder
- bei einer detektierten Abweichung eine Einleitung von zumindest einer, bevorzugt mehreren, Gegenmaßnahme durch die Anlagensteuerung erfolgt.

Die erfindungsgemäße Greifvorrichtung kann dazu ausgebildet sein, mehrachsige Bewegungen im Raum durchzuführen, was bedeutet, dass die Greifvorrichtung bevorzugt als Teil eines mehrachsigen Manipulators bzw. Roboters ausgeführt ist. Die Bewegungen der Greifvorrichtung können entsprechend der erforderlichen Bearbeitungsschritte eines Objekts, insbesondere eines Blechteils, vorgegeben werden. Die Bewegungsabläufe werden in einer Anlagensteuerung als Bewegungsdaten verfügbar gemacht und verarbeitet. Derartige Anlagensteuerungen sind dem Fachmann bekannt, wie auch mehrachsige Manipulatoren bzw. Roboter, weshalb hier auf eine weitere Beschreibung verzichtet wird. Die Bewegungsdaten der Greifvorrichtung werden zumindest in periodischen Intervallen, auf Befehl der Anlagensteuenmg und/oder z.B. eines Anlagenbedieners auch azyklisch, und im Grenzfall kontinuierlich ermittelt und der Anlagensteuerung verfügbar gemacht. Die Bewegungsdaten umfassen die Bewegungsgeschwindigkeit und/oder Bewegungsrichtung und/oder die Beschleunigung der Greifvorrichtung bzw. des Greifmoduls, wodurch die genaue Position der Greifbacken als Funktion der Zeit vorgebbar und/oder messbar und somit bekannt ist. Die Erfassung der Bewegungs- und/oder Positionsdaten der Greifvorrichtung erfolgt in der Regel durch Sensoren, wie sie dem Fachmann bekannt sind und daher nicht weiter erläutert werden. Durch die beschriebene Anordnung von Greifbacken und dem zumindest einen Sensorelement mit seinem Sensorbereich in den Aufnahmeraum, wird erst eine Messung der Objektdaten und somit die Detektion eine Relativbewegung und/oder Relativgeschwindigkeit des Objekts relativ zur Greifvorrichtung zugänglich. Im Kontext dieser Erfindung ist die Bezeichnung Relativbewegung stellvertretend für die Relativgeschwindigkeit aber auch Relativbeschleunigung des Objekts. Die Erfassung dieser Objektdaten des ergriffenen und bewegten Objekts mittels zumindest einem Sensorelement erfolgt zumindest periodisch, kann aber auch durch die Anlagensteuerung azyklisch veranlasst werden und im Grenzfall kontinuierlich erfolgen. Die Bewegungs- und Objektdaten sind somit von der Anlagensteuerung erfass- und kontrollierbar und können zumindest periodisch miteinander verglichen werden.

Vor allem in der Blechbearbeitung, z.B. beim Biegen, Pressen oder Stanzen, können die erforderlichen Bewegungsabläufe sehr vielfältig sein und die Abstimmung der Umform- bzw. Bearbeitungsmaschine mit einer Zugabe-/ Manipulations- und/oder Entnahmevorrichtung erforderlich machen. Ein Vorteil der erfindungsgemäßen Greifvorrichtung bzw. des Verfahrens liegt darin, dass die Gefahr des Verrutschens eines Objekts, bevorzugt eines Blechs oder Blechteils, effizient verringert wird, wodurch die Verfahrgeschwindigkeit der Greifvorrichtung optimiert werden kann. Das bedeutet, dass für jedes Objekt die Verfahrgeschwindigkeit soweit erhöht werden kann, dass gerade kein Herausrutschen aus dem Aufnahmeraum erfolgt, da eine Erkennung einer Relativbewegung und/oder Relativgeschwindigkeit des Objekts umgehend von der Anlagensteuerung erkannt wird und zumindest eine geeignete Gegenmaßnahme eingeleitet wird. Eine dadurch schnellere und exaktere Positionierung eines zu bewegenden Objekts zur, innerhalb und/oder von der Bearbeitungsmaschine kann die Produktivität steigern und die Betriebskosten senken.

Ein weiterer Vorteil der erfindungsgemäßen Greifvorrichtung bzw. des erfindungsgemäßen Verfahrens liegt darin, dass auf die Errichtung eines Schutzzauns, zum Zweck etwaige herausgeschleuderte Bleche in ihrer Bewegung zu stoppen, verzichtet werden kann. Darüber hinaus wird die Wahrscheinlichkeit von fehlerhaft platzierten Objekten vor einem nachfolgenden Bearbeitungsschritt deutlich reduziert, wie dies z.B. bei Blech-/teilen passieren kann, wenn sie zu einer Biegelinie nicht korrekt ausgerichtet sind. Durch die Greifvorrichtung bzw. das Verfahrens lassen sich somit auch die Qualität der Bauteile erhöhen und mögliche Kosten für Reparatur, Instandhaltung, Stillstand oder Material senken.

Die erfindungsgemäße Idee erlaubt dem Fachmann die Größe der Greifvorrichtung selbst festzulegen, womit auch die Größe des Aufnahmeraums, welcher zwischen den zumindest zwei Greifbacken entsteht, skaliert. Die Greifvorrichtung wird häufig nicht das gesamte Objekt entlang einer Kante erfassen, sondern in zumindest einer Richtung gegenüber dem zu bewegenden Objekt kleiner sein. Leicht vorstellbar ist ein kleiner Streifen, welcher von zwei Greifbacken geklemmt wird, deren Breite größer ist als die Breite des Streifens. Daher kann die Greifvorrichtung auch in einer Richtung relativ zum Objekt oder zumindest Teilen eines Objekts größer ausgebildet sein. Vorteilhaft ist jedoch, wenn beim Ergreifen von zumindest Teilen des Objekts nicht nur vom zumindest einen Sensorelement erkannt wird "dass" ein Objekt ergriffen wird, sondern auch welches Gewicht und/oder Form und/oder Lage die zumindest Teile des Objekts relativ zur Greifvorrichtung aufweisen.

Daher kann es zweckmäßig sein, wenn das Sensorelement dazu ausgebildet ist zumindest periodisch eine Position und/oder eine Lage und/oder Gewicht des Objekts als Objektdaten zu erfassen.

Dies hat den Vorteil, dass durch das zumindest eine Sensorelement eine nicht korrekte Lage in horizontaler Richtung, aber auch inkorrekte Position in vertikaler und/oder horizontaler Richtung, also z.B. von "schief" ausgerichteten Rohteilen oder Halbzeugen gegenüber dem Greifwerkzeug erkannt werden können. Eine Korrektur der Greifvorrichtung kann automatisch von der Anlagensteuerung veranlasst werden kann um das Objekt für einen nachfolgenden Verfahrensschritt korrekt auszurichten. Außerdem kann z.B. durch die Bestimmung des Gewichts eine Doppelblecherkennung erfolgen. Diese Maßnahmen können daher entscheidend zur Erhöhung von Sicherheit und Qualität beitragen.

Ferner kann es vorgesehen sein, dass das Sensorelement als zumindest ein optoelektronisches, bevorzugt laseroptisches und/oder akustisches und/oder kapazitives und/oder induktives Sensorelement ausgebildet ist.

Diese Maßnahme erlaubt dem Fachmann eine Gestaltung der Greifvorrichtung, abhängig vom Material und/oder der Oberflächenbeschaffenheit der zu bewegenden Objekte zu optimieren. Für elektrisch leitfähige und magnetische Materialien können z.B. induktive Sensorelemente verwendet werden. Akustische Sensorelemente sind auch für elektrisch nicht leitfähige und/oder nichtmagnetische Materialien einsetzbar. Kapazitive Sensorelemente sind ebenso nahezu keinen Einschränkungen durch elektrische Leitfähigkeit und/oder magnetische Eigenschaften gesetzt. Als kapazitive Sensorelemente kommen hier vor allem Näherungsschalter, Abstandssensoren, und besonders bevorzugt Beschleunigungssensoren als zumindest ein Sensorelement in Frage. Optoelektronische Sensorelemente haben den Vorteil, dass sie günstig und vielseitig einsetzbar sind und auch nahezu keinen Einschränkungen durch elektrische Leitfähigkeit und/oder magnetische Eigenschaften des Materials des zu bewegenden Objekts unterliegen. Als optoelektronische Sensorelemente können z.B. bilderfassende Sensorelemente wie etwa eine CCD-Kamera und dergleichen verwendet werden. Ebenso sind als optoelektronische Sensorelemente einfachere Lichtsensoren vorstellbar. Besonders bevorzugt werden laseroptische Sensorelemente, da deren Wellenlänge und/oder Energiebereich relativ unabhängig von Streulicht und/oder Schattenbildung gewählt werden kann. Hierdurch kann der Einfluss etwaiger Oberflächenverunreinigungen oder spiegelnden Oberflächen, welche zu Unschärfen in der Detektion von Relativgeschwindigkeit führen können, verringert werden. Überdies kann mit laseroptischen Sensorelementen eine sehr hohe Präzision und Erfassungsgeschwindigkeit einer Relativbewegung und/oder Relativgeschwindigkeit eines Objekts erreicht werden.

Darüber hinaus kann vorgesehen sein, dass zwei Sensorelemente in einer signalmäßigen Redundanz mit der Anlagensteuerung verbunden angeordnet sind.

Unter signalmäßiger Redundanz wird hierbei verstanden, dass beide Sensorelemente dem selben Objekt, bzw. dem selben Teil eines zu bewegenden Objekts, zugeordnet sind und deren Messsignale von der Anlagensteuerung, bevorzugt gleichzeitig, erfasst und ausgewertet werden können. Diese Maßnahme kann die Prozesssicherheit erhöhen im Falle, dass ein Sensorelement beschädigt oder verschmutzt sein sollte. Überdies ist eine solche Anordnung dazu geeignet, eine nichtlineare Bewegung eines Objekts zu detektieren. Dies kann z.B. eine Verdrehbewegung oder ein seitliches Verrutschen um eine Drehachse innerhalb der Greifvorrichtung sein. Im Grenzfall könnte eine Drehachse des Objekts mit einer Achse des Sensorelements in Richtung seines Sensorbereiches zusammenfallen, wodurch eine die Relativbewegung des Objekts nicht als eine "lineare Relativgeschwindigkeit" an einem ersten Sensorelement erfasst werden. Ein zweites ein benachbart angeordnetes Sensorelement wäre jedoch in der Lage die Relativbewegung und/oder Relativgeschwindigkeit des Objekts durch die Redundanzschaltung zu erfassen.

Vorteilhaft ist auch eine Ausprägung, gemäß welcher vorgesehen sein kann, dass die Innenflächen der Greifbacken zumindest teilweise parallel zueinander ausrichtbar ausgebildet sind.

Die Ausbildung von Greifbacken, welche zumindest teilweise zueinander parallele, bzw. parallel ausrichtbare, Abschnitte aufweisen und somit zumindest teilweise parallel ausrichtbar sind hat den Vorteil, dass das zumindest eine Sensorelement eine gleichbleibende Orientierung, also einen gleichbleibenden Sensorbereich, relativ zu aufzunehmenden Objekten mit unterschiedlicher Größe aufweist. Diese Anpassung erlaubt eine hohe Qualität der Messung des zumindest einen Sensorelements, selbst wenn der Aufnahmeraum unterschiedlich groß sein muss, weil z.B. Objektgröße variiert. Weiters kann im Vergleich zu einer punktförmigen Kontaktfläche, durch die Ausbildung von parallelen Innenflächen bzw. Kontaktflächen der Greifbacken die Flächenpressung am Objekt reduziert werden. Dies kann besonders bei empfindlichen Objektoberflächen vorteilhaft sein. Außerdem kann durch die parallelen Innenflächen vermieden werden, dass es zu einer ungewollten seitlichen Absenkung des Objekts nach dem Aufgreifen kommt, wenn das Objekt abseits seines Schwerpunkts ergriffen wird. Ein solches Absenken in eine Seite könnte dazu führen, dass das Objekt in einer "schiefen" Ebene gehalten und bewegt wird, wodurch ein nachfolgender Bearbeitungsschritt eventuell nicht oder nur mangelhaft durchgeführt werden kann oder eine zusätzliche Korrektur der Position erforderlich macht. In Summe führen parallele Abschnitte also zu einer schnelleren, exakteren und somit prozesssichereren Positionierung und Erfassung der zu bewegenden Objekte, wodurch Kosten eingespart und die Qualität gesteigert werden kann.

Gemäß einer Weiterbildung ist es möglich, zumindest eine Greifbacke um eine Klemmachse drehbar ausgebildet ist und zur Erhöhung der Klemmkraft am zu greifenden Objekt zumindest ein Winkelkorrekturmittel, aufweist.

Eines oder mehrere solcher Winkelkorrekturmittel sind bevorzugt an einem Endabschnitt einer Greifbacke angeordnet. Ein Winkelkorrekturmittel dient dazu die Innenfläche des Endabschnitts der Greifbacke zur Oberfläche zumindest eines Teils des Objekts parallel auszurichten. Es wird somit ein Winkel zwischen dem Endabschnitt und der Klemmachse korrigiert und die Kraft an der Greifbacke über das Winkelkorrekturmittel immer normal zur Objektoberfläche aufgebracht. Ein Winkelkorrekturmittel ist bevorzugt nur an jenem/jenen Greifbacken ausgebildet, an welchen kein Sensorelement angeordnet ist, wodurch der Sensorbereich des zumindest einen Sensorelements an einer korrespondierenden Greifbacke nicht beeinträchtigt wird. Weiters wird erreicht, dass der Aufnahmeraum zwischen zumindest zwei Greifbacken für Objekte unterschiedlicher Größe variierbar ist. Ein solches Winkelkorrekturmittel, kann z.B. eine schwenkbare Griffplatte sein, die sich der Ausrichtung der Greifbacke bzw. der Objektoberfläche anpasst. Ebenso kann ein Winkelkorrekturmittel auch als elastischer Körper derart an der Innenfläche einer Greifbacke ausgebildet sein, dass er sich bei einer Schließbewegung der Greifbacken zumindest entlang einer Kontaktlinie, bevorzugt Kontaktfläche, parallel zur Objektoberfläche anpasst. Eine Gummilamelle oder dergleichen sind hier besonders gut vorstellbar.

Ferner kann es zweckmäßig sein, wenn die Greifvorrichtung als Zangengreifer ausgebildet ist, welcher bevorzugt zwei um die Klemmachse drehbare Greifbacken bzw. Zangen aufweist.

Für manche Anwendungen kann es Vorteile aufweisen, wenn alle Greifbacken bzw. Zangen um eine gemeinsame Klemmachse drehbar sind, da auf diese Weise der Mittelpunkt des Aufnahmeraums zwischen den Endabschnitten der Greifbacken mit einer Normalen auf die Klemmachse immer in der gleichen Ebene liegt. Eine sehr homogene Krafteinleitung auf die Objektoberfläche wird dadurch ermöglicht, was zur Erhöhung der Qualität beitragen kann. Weiters sind durch die zangenförmig ausgebildeten Greifbacken auch Objekte ergreifbar, welche lokal eine größere Abmessung aufweisen als der Aufnahmeraum zwischen den Greifbacken. Gerade bei der Blechteilumformung ist dies vorteilhaft, da somit das Blech zwischen den Greifbacken festgehalten wird, aber z.B. ein umgeformter Rand zwischen den Greifbacken, also hinter dem Aufnahmeraum, und vor der Klemmachse positioniert werden kann. Somit sind auch komplizierte Formen von Objekten ergreifbar.

Es kann alternativ vorgesehen sein, dass zumindest eine Greifbacke parallel zur zweiten Greifbacke verschiebbar ausgebildet ist.

Diese sehr einfach zu realisierende Form eines Plattengreifers ermöglicht einen parallelen Aufgriff von Objekten, bevorzugt Blechen, und ist damit kosteneffizient herstellbar, da nur eine Greifbacke parallel zur zweiten Greifbacke verschiebbar ausgebildet sein muss.

Darüber hinaus kann vorgesehen sein, dass die Greifvorrichtung als Plattengreifer ausgebildet ist, welcher zwei normal zu einer Klemmachse bewegliche Greifbacken bzw. Platten aufweist.

Die Ausbildung von zwei parallel zueinander verschiebbaren Greifbacken am Greifmodul ermöglicht, dass der Mittelpunkt des Aufnahmeraums zwischen den Greifbacken in einer Ebene mit einer gedachten Verlängerung der Greifvorrichtung verbleibt. Somit ist die Krafteinleitung unabhängig von der Bauteilstärke bzw. einem lokalen Durchmesser eines zu bewegenden Objekts und kann sehr homogen auf die Objektoberfläche erfolgen, was zur Erhöhung der Qualität beitragen kann. Weiters sind die plattenförmig ausgebildeten Greifbacken bzw. Greifplatten besonders geeignet für den Blechtransport bzw. die Blechmanipulation, da das Blech zwischen den Platten mit einer vergleichsweise großen Fläche festgehalten wird, wodurch ein großer Widerstand gegen Verrutschen gewährleistet wird. zumindest einer dem Aufnahmeraum zugewandten Innenfläche zumindest einer Greifbacke ist ein Reibbelag, zur Erhöhung der Reibung der Greifbacke zu zumindest Teilen der Objektoberfläche, angeordnet.

Wegen der Erhöhung der Reibung zwischen Greifbacken und den Teilen der Objektoberfläche, an denen sie angreifen, wird eine schonende Behandlung der Objektoberfläche erreicht.

. Zudem wird die Sicherheit beim Ergreifen und gegen Verrutschen des Objekts erhöht. Es sind hierfür Reibbeläge denkbar, weiche einen Reibkoeffizienten gegenüber Stahl aufweisen, welcher höher ist als jener von Stahl gegen Stahl. Bevorzugt kommen hierfür elastische Polymere zum Einsatz, welche einen ausreichend hohen Reibkoeffizienten gegenüber Stahl aufweisen, da die Formgebung dieser relativ einfach ist und sie relativ leicht austauschbar und kostengünstig sind.

Des Weiteren ist gemäß der Erfindung vorgesehen, dass zumindest eine Greifbacke zumindest ein daran ausgebildetes Sicherungsmittel umfasst. Der Reibbelag ist außerdem mit einer Federkraft vorgespannt und in Richtung der Klemmkraft zwischen einer Ruhestellung und einer Aktivstellung beweglich ausgebildet. In der Ruhestellung ist der Reibbelag das Sicherungsmittel überragend angeordnet. In der Aktivstellung ist, zur Ausübung einer zumindest punktförmigen Sicherungskraft auf zumindest Teile einer Objektoberfläche, der Reibbelag relativ zum Sicherungsmittel zurückversetzt angeordnet. > [insert into page 3]

Die Ruhestellung entspricht der Situation, dass die Federkraft auf den Reibbelag geringer größer ist als die Klemmkraft der Greifvorrichtung, wodurch nur der Reibbelag mit zumindest Teilen der Objektoberfläche in Kontakt ist und das zumindest eine Sicherungsmittel relativ zur Oberfläche des Reibbelags zurückversetzt bleibt. In der Aktivstellung, wobei die Klemmkraft die Federkraft des Reibbelags übersteigt, tritt das zumindest eine Sicherungsmittel gegenüber der Oberfläche des Reibbelags hervor, wodurch eine Sicherungskraft zumindest punktförmig durch das auf zumindest Teile der Objektoberfläche aufgebracht wird.

Dieses Sicherungsmittel liegt also während eines Normalbetriebs in einer Ruhestellung unter der Innenfläche der Greifbacke, oder maximal in der gleichen Ebene der Innenfläche bzw. des Reibbelags, verborgen um die Objektoberfläche nicht zu beschädigen. Bei Detektion einer Abweichung zwischen Objektdaten und Bewegungsdaten, welche einer Relativbewegung bzw. Relativgeschwindigkeit des zu bewegenden Objekts entspricht, kommt es zur Einleitung von Gegenmaßnahmen durch die Anlagensteuerung. Eine dieser Gegenmaßnahmen kann die Aktivstellung des Sicherungsmittels sein, wobei das der Reibbelag durch Aufbringung einer die Federkraft übersteigenden Klemmkraft aus seiner Ruhestellung bewegt wird und somit das Sicherungsmittel relativ zu zumindest Teilen der Innenfläche und/oder des Reibbelags der Greifbacke schlagartig hervortritt. Dabei wird durch eine vorgebbare Sicherungskraft das Sicherungsmittel, zusätzlich zu den Innenflächen mit zumindest Teilen der Objektoberfläche in Kontakt gebracht. Diese Ausführungsform kann eine Erhöhung der lokalen Flächenpressung bewirken, ohne dass dabei das Objekt zwingend beschädigt werden muss. Dies kann zur Erhöhung der Prozess- und Anlagensicherheit beitragen.

Gemäß einer besonderen Ausprägung ist es möglich, dass das zumindest eine Sicherungsmittel zur Ausübung einer zumindest punktförmigen Sicherungskraft auf zumindest Teile einer Objektoberfläche dorn- und/oder hakenförmig ausgebildet ist.

Es hat sich als vorteilhaft erwiesen, wenn das Sicherungsmittel mit einer lokal erhöhten Sicherungskraft auf das Objekt einwirken kann, welches eine unbeabsichtigte Relativbewegung durchführt. Das zu bewegende Objekts wird somit nicht mehr alleine durch eine reibschlüssige Verbindung zwischen den Greifbacken mit einer Haltekraft gehalten, sondern zusätzlich wird eine formschlüssige Verbindung durch die im Wesentlichen punktförmig wirkende Sicherungskraft gesichert. Hierbei muss die Haltekraft deutlich größer als die Federkraft sein.

Dabei kann das Sicherungsmittels halbkugel- und/oder krallenförmig und/oder dorn- bzw. hakenförmig gestaltet sein, wodurch die Sicherungswirkung erhöht werden kann. Eine plastische Verformung der Objektoberfläche kann aufgrund der erhöhten Sicherheit in Kauf genommen werden. Der Reibbelag, respektive das Sicherungsmittel, können nach der beschriebenen Gegenmaßnahme durch Quittieren einer Fehlermeldung, Austauschen des beschädigten Bauteils bzw. Objekts, etc., wieder in die Ruheposition bzw. Ruhestellung versetzt werden.

Entsprechend einer vorteilhaften Weiterbildung kann vorgesehen sein, dass der Reibbelag durch ein hydraulisches, pneumatisches, mechanisches und/oder elektromechanisches Federmittel beweglich ausgebildet ist.

Es hat sich als vorteilhaft erwiesen, dass die Federkraft über einen zusätzlichen und/oder unabhängig ansteuerbaren Antrieb aufgebracht wird. Die Greifbacken und/oder das Greifmodul bzw. die Greifvorrichtung werden normalerweise hydraulisch und/oder elektromotorisch angetrieben. Es kann vorgesehen sein, dass der Reibbelag über ein Federmittel derart gelagert ist, dass eine Federkraft auf den Reibbelag in Richtung des Aufnahmeraums wirkt und unabhängig von z.B. einer Versorgung der Greifbacken und/oder des Greifmoduls ist. Es ist möglich die Federkraft hydraulisch über eine separate Hydraulikleitung aufzubringen, welche nicht mit der Hydraulik der Greifvorrichtung verbunden ist. Ebenso ist denkbar, dass Federmittel über eine vom Antrieb des restlichen Greifmoduls unabhängigen Pneumatikleitung versorgt wird. Alternativ dazu, oder auch unterstützend, kann der Reibbelag mit einem Federmittel vorgespannt sein, welches z.B. mechanisch über ein relativ einfaches Federelement, wie etwa eine Schrauben- oder Blattfeder, mit einer Federkraft ausgebildet ist. Es ist auch denkbar, dass das Federmittel und der Reibbelag einteilig aus einem federelastischen, bevorzugt synthetischen Kunststoff-, Material hergestellt sind, welches die vorgebbare Federkraft intrinsisch aufweist. Bei Aktivstellung des Sicherungsmittels wird eine Klemmkraft auf die Objektoberfläche ausgeübt, welche die Federkraft des Federmittels auf den Reibbelag übersteigt, wodurch das Sicherungsmittel gegen die Objektoberfläche gedrückt wird.

Ferner kann vorgesehen sein, dass das Greifmodul als zumindest zweiachsig beweglicher Manipulator, bevorzugt als ein mehrachsiger Roboter, ausgebildet ist.

Ein automatisiertes Bearbeitungszentrum, welches mehrere Komponenten umfasst, wie etwa eine Objektbereitstellung oder Entnahme, eine Bearbeitungsmaschine, eine Ablage für die fertig bearbeiteten Objekte, ist die erfindungsgemäße Greifvorrichtung besonders vorteilhafterweise jener Teil eines beweglichen, bevorzugt mehrachsigen Roboters, welcher als Greifwerkzeug dient. Es werden dadurch die Freiheitsgrade der Greifvorrichtung im Zusammenspiel mit einem mehrachsigen Roboter erhöht und eine Erhöhung der Verfahrgeschwindigkeit des Greifmoduls bzw. des Roboters ermöglicht, ohne dass ein Verrutschen des Objekts zu befürchten ist.

Darüber hinaus kann vorgesehen sein, dass der Manipulator entlang einer Verfahrstrecke zur Erhöhung eines Bewegungsbereiches des Manipulators, beweglich ausgebildet ist.

Dies stellt eine kosteneffiziente und relativ einfach umzusetzende Maßnahme dar, den Bewegungsbereich eines Manipulators an die Erfordernisse eines automatisierten Bearbeitungszentrums anzupassen. Diese Maßnahme ist besonders vorteilhaft um die Gesamtabmessungen des Roboters bzw. Manipulators gering zu halten, jedoch die Reichweite entlang einer, bevorzugt horizontalen, Verfahrstrecke zu erhöhen. Die Verfahrrichtung kann dabei von der Anlagensteuerung vorgegeben werden.

Vorteilhaft ist auch eine Ausprägung, gemäß welcher vorgesehen sein kann, dass der zumindest zweiachsig bewegliche Manipulator zumindest einen mit der Anlagensteuerung verbundenen, laseroptischen Sicherheitsscanner, zur Erfassung eines möglichen Fremdkörpers in einem vorgebbaren Warnbereich und einem vorgebbaren Stoppbereich, aufweist.

Der laseroptische Sicherheitsscanner ist bevorzugt an einer erhabenen Position des Roboters derart angeordnet, dass eine freie Sichtverbindung zum Bearbeitungsbereich gewährleistet ist. Das bedeutet, der laseroptische Sicherheitsscanner ist bevorzugt oben an einem Arm des Roboters, oder an einem Drehturm des Roboters, an einer Stelle angebracht, die es ermöglicht, dass der Warnbereich und Stoppbereich in freier Sichtlinie zum Sicherheitsscanner stehen. Der laseroptische Sicherheitsscanner kann dabei z.B. ein Netz aus Lichtstrahlen oder -bündel auf den Boden des Bearbeitungsbereichs werfen, welches bei Eintritt eines Fremdkörpers vom Sicherheitsscanner detektiert wird.

Ein Warnbereich und ein Stoppbereich können vorab definiert werden, welche in der Anlagensteuerung hinterlegt werden und den Bearbeitungsbereich als eine Art "fiktiver Schutzzaun" definieren. Als Zentrum des Warn- und Stoppbereichs sollte die vertikale Drehachse des Roboters verwendet werden, wobei der Beginn des Warnbereichs weiter entfernt davon liegen sollte als der Stoppbereich. Es hat sich als vorteilhaft für die Personensicherheit erwiesen, dass der Warnbereich zumindest den Bewegungsradius des Roboters und somit der Greifvorrichtung und die maximalen Abmaße der jeweils zu bewegenden Teile in horizontaler Richtung und einen zusätzlichen Sicherheitsabstand von 0.5 bis 5.0 m (Meter), bevorzugt 1.5 bis 2.5 m, aufweist. Der Stoppbereich liegt am Warnbereich angrenzend oder auch mit diesem überlappend und ist durch den Bewegungsradius Roboters und somit der Greifvorrichtung und die maximalen Abmaße der jeweils zu bewegenden Teile in horizontaler Richtung und einem geringeren zusätzlichen Sicherheitsabstand von 0.2 bis 2.0 m, bevorzugt 0,5 bis 1.0 m definiert.

Der Warnbereich definiert einen Bearbeitungsbereich, in dem bei Detektion eines Fremdkörpers zumindest eine Gegenmaßnahme eingeleitet wird, welche einer ersten Stufe entspricht, und aus der Gruppe: Erhöhung der Klemmkraft der Greifbacken, und/oder Verlangsamen einer Verfahrgeschwindikeit der Greifvorrichtung, und/oder Auslösen eines ersten optischen Warnsignals, und/oder Auslösen eines ersten akustischen Warnsignals, und/oder Absenken des bewegten Objekts in Vertikalrichtung, eingeleitet wird. Analog dazu, definiert der Stoppbereich einen Bearbeitungsbereich, in dem bei Detektion eines Fremdkörpers zumindest eine Gegenmaßnahme eingeleitet wird, welche einer zweiten Stufe entspricht, und aus der Gruppe: Stoppen der Bewegung der Greifvorrichtung bzw. des Roboters, und/oder Aktivstellung des Sicherungsmittels, und/oder Auslösen eines ersten oder zweiten, vom ersten unterschiedlichen, optischen Warnsignals, und/oder Auslösen eines ersten oder zweiten, vom ersten unterschiedlichen, akustischen Warnsignals; eingeleitet wird. Auf diese Weise kann erreicht werden, dass die Sicherheit für Personen auch bei hohen Verfahrgeschwindigkeiten der Greifvorrichtung ermöglicht wird und auf einen Schutzzaun verzichtet werden kann.

Der Warnbereich und/oder Stoppbereich müssen dabei nicht zwingend konzentrisch und/oder symmetrisch von der vertikalen Drehachse des Manipulators bzw. Roboters entfernt sein. Es ist durchaus möglich, dass die Abmessungen der fertigen Teile wesentlich geringer sind, als jene des Halbzeugs oder Blechs, wodurch die Ablage näher am Roboter sein kann, als die Aufnahme. Dadurch kann ein asymmetrischer Bearbeitungs- und somit Warn- und/oder Stoppbereich definiert werden, welcher eine kompaktere Anordnung benachbarter Bearbeitungszentren erlaubt als dies mit symmetrischen Bereichen möglich wäre.

Überdies sind die Warn- und/oder Stoppbereiche im Rahmen der Erfindung nicht ortsfest, sondern können insbesondere in Kombination mit einem entlang einer Verfahrstrecke beweglichen Manipulator, relativ zu diesem mitbewegt werden und haben daher somit einen beweglichen Fixpunkt. Hierdurch wird ermöglicht, das selbst während des Prozesses ein Austausch von bereitgestellten Objekten, also z.B. Halbzeug oder Fertigteilen, durchgeführt werden kann, wenn der Warnbereich und/oder Stoppbereich vom jeweiligen Bereich entfernt liegen, da der Manipulator und somit der Bearbeitungsbereich davon entfernt liegt. Dies wäre bei einem fixen Schutzzaun nicht möglich, sondern würde komplizierte und aufwändige Übergabestationen erforderlich machen.

Das erfindungsgemäße Verfahren zur überwachten Bewegung von Objekten, bevorzugt Blechen, umfasst die folgenden Verfahrensschritte:
- Bereitstellen einer oben beschriebenen erfindungsgemäßen Greifvorrichtung umfassend ein Greifmodul, welches zumindest zwei miteinander kooperierend ausgebildete Greifbacken aufweist, welche einen dazwischenliegenden Aufnahmeraum zur Aufnahme von zumindest Teilen eines zu überwachenden und transportierenden Objekts bilden, und die Greifbacken derart ausgebildet sind, dass durch Aufbringen einer vorgebbaren Klemmkraft zumindest eine reibschlüssige Verbindung zwischen den Greifbacken und zumindest Teilen des Objekts ermöglicht wird wodurch das Objekt bewegbar ist, sowie zumindest ein Sensorelement zur Erfassung von Objektdaten des zu bewegenden und überwachenden Objekts, wobei das zumindest eine Sensorelement an zumindest einer Greifbacke mit seinem Sensorbereich dem Aufnahmeraum zugewandt angeordnet und dazu ausgebildet ist durch zumindest zeitweilige Erfassung der Objektdaten eine Relativbewegung und/oder Relativgeschwindigkeit des Objekts bezüglich zumindest einer der Greifbacken zu detektieren;
- Bereitstellen zumindest des zu bewegenden Objekts;
- Greifen des zu bewegenden Objekts mittels Greifbacken der Greifvorrichtung;
- Bewegung des Objekts entsprechend eines vorgebbaren Bewegungsablaufs, wobei
- eine Erfassung von Bewegungsdaten der Greifvorrichtung erfolgt und
- eine zumindest periodische Auswertung der Bewegungsdaten von einer Anlagensteuerung erfolgt und
- eine Erfassung von Objektdaten des ergriffenen und bewegten Objekts mittels zumindest eines Sensorelements erfolgt und
- eine zumindest periodische Auswertung der Objektdaten in der Anlagensteuerung erfolgt; und
- ein zumindest periodischer Abgleich der Objektdaten mit den Bewegungsdaten dazu genutzt wird eine etwaige Abweichung, welcher einer Relativgeschwindigkeit des zu bewegenden Objekts relativ zu zumindest einer der Greifbacken entspricht, zu detektieren und wobei
- keine Abweichung einem Normalbetrieb entspricht und der vorgegebene Bewegungsablauf beendet wird; oder
- bei einer detektierten Abweichung eine Einleitung von zumindest einer, bevorzugt mehreren, Gegenmaßnahme durch die Anlagensteuerung erfolgt.

Eine Reihe von Vorteilen und Merkmalen des erfindungsgemäßen Verfahrens sind bereits zuvor an geeigneter Stelle für die Greifvorrichtung und deren Funktionsweise erwähnt worden, weshalb diese hier nicht wiederholt werden.

Es ist jedoch von praktischer Bedeutung, wenn zur Bestimmung der Abweichung zwischen Bewegungsdaten und Objektdaten in der Anlagensteuerung eine Reihe von Grenzwerten definiert sind, welche eine Relativbewegung und/oder Relativgeschwindigkeit des Objekts, bevorzugt des zu bewegenden Blechs, sicherstellen. Dabei kann eine gewisse Toleranzgrenze vorgesehen werden. Optimierte Grenzwerte für die Einleitung von Gegenmaßnahmen der ersten Stufe, sowie gegenüber den ersten Grenzwerten höhere Grenzwerte zur Einleitung von Gegenmaßnahmen der zweiten Stufe, können in der Anlagensteuerung hinterlegt werden. Unterschiedliche Prozesse bzw. Bewegungsabläufe und Objekte können unterschiedliche Grenzwerte erfordern.

Gemäß einer Weiterbildung ist es somit möglich, dass die Einleitung der zumindest einen Gegenmaßnahme abhängig vom Ausmaß der Relativgeschwindigkeit zweistufig erfolgt, wobei bei Erreichen eines ersten Grenzwerts zumindest eine Gegenmaßnahme einer ersten Stufe eingeleitet wird, und wobei bei Erreichen eines zweiten Grenzwerts zumindest eine Gegenmaßnahme einer zweiten Stufe eingeleitet wird.

Die Einleitung der zumindest einen Gegenmaßnahme abhängig vom Ausmaß der Relativgeschwindigkeit erfolgt bevorzugt, bei einem ersten Grenzwert der Relativgeschwindigkeit von 0.1-2.0 mm/s bzw. einem zweiten Grenzwert der Relativgeschwindigkeit von mehr als 2.1 mm/s, besonders bevorzugt 1.0 mm/s.

Die Verwendung solcher Sicherheitsschwellwerte dient der erhöhten Prozess- und Personensicherheit. Darüber hinaus wird durch die zweitstufige Einleitung von Gegenmaßnahmen ermöglicht, dass der Bearbeitungsschritt u.U. noch fertig geführt werden kann, ohne dass ein Prozessstopp oder -abbruch erforderlich ist.

Die Gruppierung von Gegenmaßnahmen der ersten und zweiten Gruppe, wurde zuvor für die Anwendung bei der Detektion eines Fremdköpers im Warn- bzw. Stoppbereich beschrieben und wird hier deshalb nicht wiederholt, sondern darauf verwiesen. Die Einleitung der Gegenmaßnahmen erfolgt erfindungsgemäß zumindest einstufig, bevorzugt zweistufig. Es kann somit in der Anlagensteuerung hinterlegt werden, für welche Bewegungsabfolge bzw. welche Verfahren, optimierte erste und zweite Grenzwerte definiert sind, um die zumindest eine Gegenmaßnahme der ersten und/oder zweiten Stufe einzuleiten. An dieser Stelle sei jedoch angemerkt, dass besonders die Erhöhung der Klemmkraft und/oder das Verlangsamen der Verfahrgeschwindigkeit der Greifvorrichtung ermöglichen können, dass der Bearbeitungsschritt noch fertig geführt werden kann. Des Weiteren kann ein Sicherungsmittel zusätzlich an der Innenfläche der Greifbacken mit dem Objekt in Kontakt gebracht werden, in dem die Haltekraft deutlich erhöht wird und die Federkraft auf den Reibbelag überwindet, wodurch eine Sicherungskraft zusätzlich zur Haltekraft der Greifbacken aufgebracht werden kann. Ein Anlagenbediener kann durch Erkennen eines akustischen und/oder optischen Warnsignals etwaige manuelle Korrekturmaßnahmen ergreifen. Das Absenken des bewegten Objekts in Vertikalrichtung nach unten hat als Gegenmaßnahme primär den Vorteil, dass im schlimmsten Falle des Entgleitens des Objekts dieses eine vorgegebene Flugbahn nach unten aufweist und somit nicht unkontrolliert über den Warn- und/oder Stoppbereich und somit den Bearbeitungsbereich des Bearbeitungszentrums hinausgeschleudert werden kann.

Ergänzend soll hier erwähnt werden, dass bei Detektion einer Relativbewegung und/oder Relativgeschwindigkeit, welche zumindest eine Gegenmaßnahme der zweiten Stufe erforderlich macht, also durch ein Erreichen des zweiten Grenzwerts, die Gegenmaßnahme sofort eingeleitet werden kann. Für das zweite optische und/oder akustische Warnsignal sollte ein anderes Warnsignal verwendet werden, als dies im Warnbereich bzw. bei Einleiten einer Gegenmaßnahme der ersten Stufe, verwendet würde. Diese Maßnahme beugt Verwechslungen vor. Durch das Stoppen der Bewegung der Greifvorrichtung kann ein Entgleiten des Objekts effizient vermieden werden.

Ferner kann es zweckmäßig sein, wenn bei Aktivstellung des zumindest einen Sicherungsmittels schlagartig die Klemmkraft über die auf den Reibbelag wirkende Federkraft erhöht wird, wodurch der Reibbelag aus seiner Ruhestellung, in welcher das Sicherungsmittel in Richtung des Aufnahmeraums verborgen liegt, derart bewegt wird, dass das zumindest eine Sicherungsmittel schlagartig relativ zum Reibbelag hervortritt. Hierdurch kann das zumindest eine Sicherungsmittel schlagartig mit zumindest Teilen der Objektoberfläche, unter Aufbringung einer zusätzlichen Sicherungskraft, in Kontakt gebracht werden.

Diese lokale Erhöhung der Flächenpressung am Bauteil kann zu einer Reduktion der Relativbewegung und/oder Relativgeschwindigkeit des Bauteils führen, da die Klemmkraft der Greifbacken durch die Sicherungskraft des zumindest einen Sicherungsmittels ergänzt wird. Die Sicherungskraft kann hierbei in einer Höhe gewählt werden, um eine plastische Verformung des zu bewegenden Objekts zu vermeiden.

Darüber hinaus kann vorgesehen sein, dass das zumindest eine Sicherungsmittel in zumindest Teile der Objektoberfläche zumindest teilweise eindringt. Hierdurch tritt eine plastische Deformation der ergriffenen Teile der Objektoberfläche ein und ein zusätzlich zur reibschlüssigen Verbindung der Greifbacken und des Objekts erfolgt auf diese Weise eine formschlüssige Verbindung.

Die Klemmkraft muss hierfür die Federkraft des Federmittels auf den Reibbelag deutlich überschreiten. Obwohl hierbei eine Beschädigung der Objektoberfläche bzw. des zu fertigenden Bauteils erfolgt, wird durch diese Gegenmaßnahme im Grenzfall ein Entgleiten des Objekts aus der Greifvorrichtung effizient vermieden. Diese Gegenmaßnahme ist einhergehend mit obiger Beschreibung vorteilhafterweise erst bei erhöhten detektierten Relativbewegungen und/oder Relativgeschwindigkeit von mehr als dem zweiten Grenzwert 2.1 mm/s, bevorzugt mehr als 1.0 mm/s, als Gegenmaßnahme zweiter Stufe, einzuleiten.

Gemäß einer besonderen Ausprägung ist es möglich, dass zumindest ein zweites Sensorelement zur Erfassung der Objektdaten verwendet wird.

Die entsprechende Wirkungsweise und deren individuelle Vorteile sind vorrichtungsseitig zuvor erwähnt worden, weshalb hier auf eine Wiederholung verzichtet wird.

Zum besseren Verständnis der Erfindung wird diese anhand der nachfolgenden Figuren näher erläutert.

Es zeigen jeweils in stark vereinfachter, schematischer Darstellung:
- Fig. 1: Ausführungsbeispiel einer Greifvorrichtung, welche an ein Objekt mittels Greifmodul ergriffen hat;
- Fig. 2: schematische Darstellung möglicher Relativbewegungen eines Objekts bzw. Blechs relativ zur Greifvorrichtung in linearer (a) Relativbewegung, oder rotierender (b) Relativbewegung;
- Fig. 3: Ausführungsbeispiele für Greifmodule, wobei die Greifbacken als Zangen (a) (b) oder Platten (c) (d) ausgeführt sind;
- Fig. 4: Ausführungsbeispiele für Greifmodule, wobei die Winkelkorrekturmittel an einer Greifbacke als schwenkbare Griffplatte (a) (b) oder elastischer Körper (c) (d) ausgeführt sind;
- Fig. 5: schematische Darstellung der Erfassung von Relativbewegungen und Einleitung von Gegenmaßnahmen (a) bis (c);
- Fig. 6: schematische Schnittdarstellung eines Greifmoduls mit Sicherungsmittel in der Ruhestellung (a) bzw. einer Aktivstellung (b);
- Fig. 7: Ausführungseispiel eines automatisierten Bearbeitungszentrums aus der Vogelperspektive mit Bewegungsbereich, Warnbereich und Stoppbereich eines Sicherheitsscanners der Greifvorrichtung;
- Fig. 8: Ausführungseispiel eines automatisierten Bearbeitungszentrums mit seitwärts beweglicher Greifvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

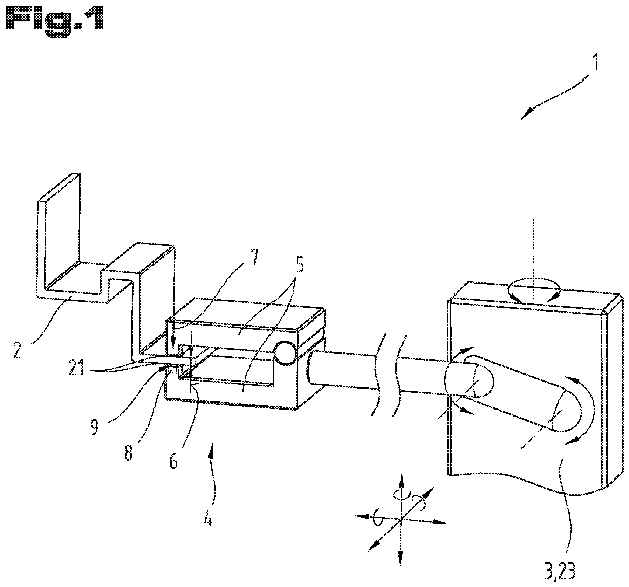

In Fig. 1 ist ein Ausführungsbeispiel einer erfindungsgemäßen Greifvorrichtung 1 dargestellt, welche ein Greifmodul 4 und eine Anlagensteuerung 3 umfasst. Das Greifmodul 4 weist zumindest zwei miteinander kooperierend ausgebildete Greifbacken 5, welche ein Objekt 2 an zumindest einem Teil der Objektoberfläche 21 ergreifen. Es ist aus Fig. 1 gut ersichtlich, dass das Objekt 2 nahezu jede beliebige Form aufweisen kann, solange ein Angreifen der Greifbacken 5 ermöglicht wird. Das dargestellte Bauteil bzw. Objekt 2 ist ein Beispiel für ein Halbzeug aus einem gewinkelten Blech, welches in einer Umformmaschine bzw. Biegemaschine 36 dem nächsten Umformschritt zugeführt wird.

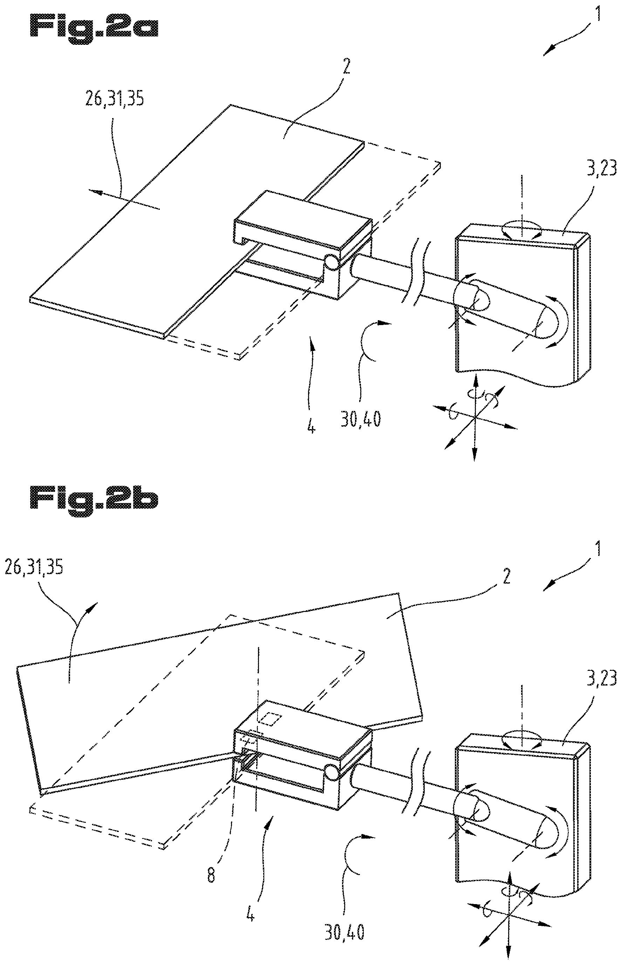

Aus Fig. 1 kann weiters ersehen werden, dass die Greifvorrichtung 1 einen zumindest zweiachsigen beweglichen Manipulator 23 aufweisen kann, welcher in dem Ausführungsbeispiel als mehrachsiger Roboter ausgebildet ist. Der Ausleger bzw. Roboterarm des Manipulators 23 ist dabei um 360° drehbar, sowie vertikal und horizontal schwenkbar und/oder ein- und ausziehbar ausgebildet. Das bedeutet im vorliegenden Beispiel, dass der Manipulator 23 sechsachsig ausgebildet ist. Die Mehrachsigkeit des Manipulators 23 und/oder der Greifvorrichtung 1 ist durch das kombinierte x-, y-, z-Achsensymbol mit den jeweiligen Rotationspfeilen in Fig. 1 und Fig. 2 schematisch angedeutet und für alle erfindungsgemäßen Ausführungsformen die bevorzugte Variante. Des Weiteren ist im objektzugewandten Ende des Manipulators 23 ist das Greifmodul 4 ausgebildet, wodurch die Greifvorrichtung 1 ein hohes Maß an Versatilität erlangt. Der Antrieb des Manipulators 23 und des Greifmoduls 4 ist bevorzugt elektromechanisch ausgebildet. Eine Klemmkraft 7 kann separat von einem eigenen Antrieb auf die Greifbacken 5 und somit auf das Objekt 2 aufgebracht werden.

Wie in den Fig. 1 bis Fig. 5, sowie Fig. 7 und Fig. 8 angedeutet kann die Anlagensteuerung 3 als Bestandteil der Greifvorrichtung 1 an oder in dieser angeordnet sein. Ebenso ist es jedoch denkbar, dass die Anlagensteuerung 3 dezentral von der Greifvorrichtung 1 angeordnet ist, und z.B. in einem nicht weiter dargestellten Display oder Bedienelement angeordnet ist.

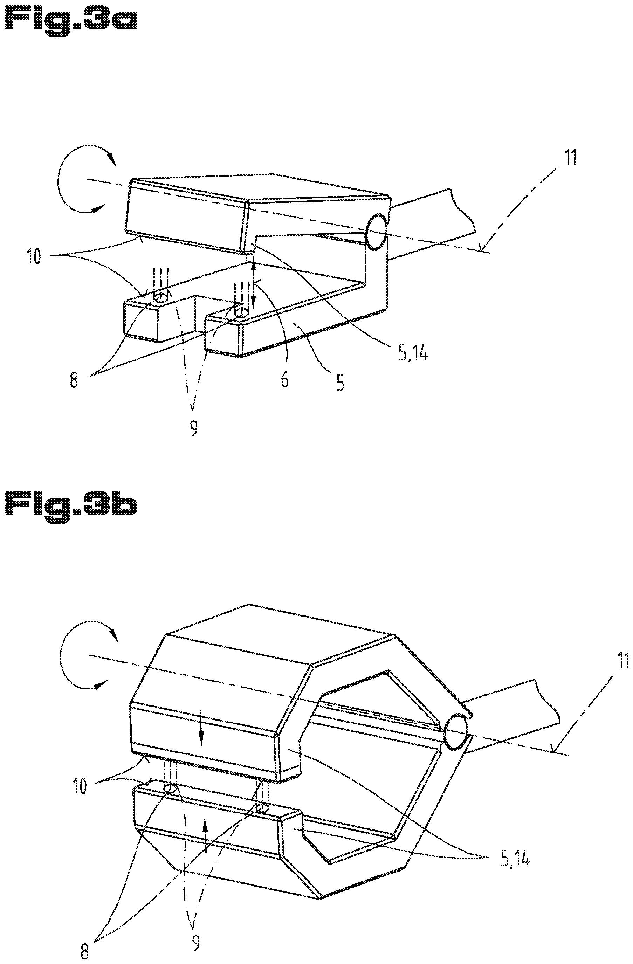

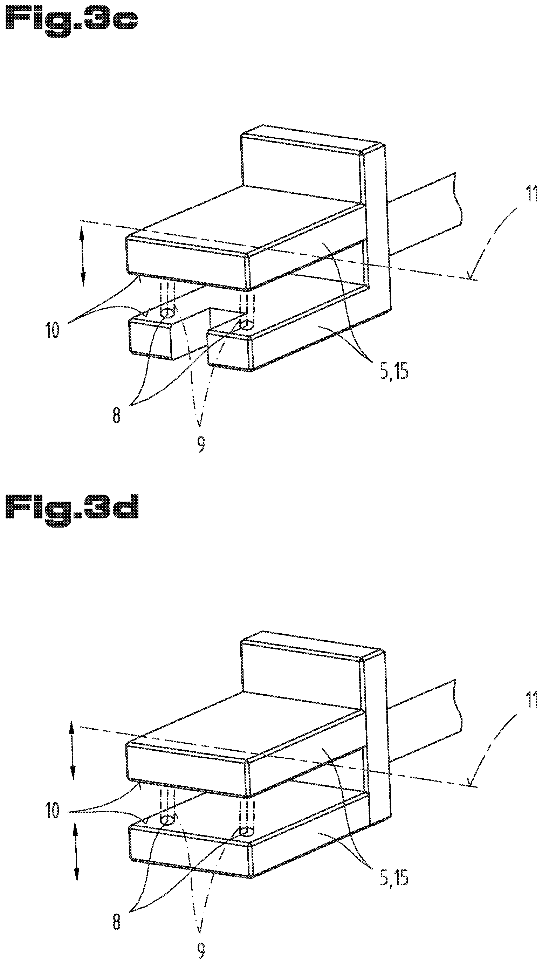

In Fig. 1 in Zusammenschau mit Fig. 3 ist weiters schematisch angedeutet, dass ein Aufnahmeraum 6 durch die kooperierenden Greifbacken 5 in dem Bereich begrenzt ist, in dem sie an ihren Innenflächen 10 ein Objekt 2 aufnehmen können. Des Weiteren sind Sensorelemente 8 an einer Greifbacke 5 derart angeordnet, dass deren Sensorbereich 9 der Objektoberfläche 21 des zu bewegenden Objekts 2 im Aufnahmeraum 6 zugewandt ist.

Die folgende Diskussion der Fig. 2, sowie der Figuren 1, 3, 4, 7 und 8 beschreibt beispielhaft, wie die Erfassung von Bewegungsdaten 40 der Greifvorrichtung 1 bzw. des Greifmoduls 4 und eine zumindest periodische Auswertung dieser Bewegungsdaten von der Anlagensteuerung erfolgt. Des Weiteren wird erfolgt eine Erfassung von Objektdaten 31 des ergriffenen und bewegten Objekts 2 mittels zumindest einem Sensorelement 8 und eine zumindest periodische Auswertung der Objektdaten 31 in der Anlagensteuerung 3. Somit wird ein zumindest periodischer Abgleich der Objektdaten 31 mit den Bewegungsdaten 40 ermöglicht um eine etwaige Abweichung, welcher einer Relativgeschwindigkeit 26 des zu bewegenden Objekts 2 relativ zu zumindest einer der Greifbacken 5, und somit dem Greifmodul 4 bzw. der Greifvorrichtung 1, entspricht, zu detektieren und geeignete Gegenmaßnahmen 29 einzuleiten.

Die Fig. 2 dient zur Illustration einiger möglicher Bewegungsarten eines von der Greifvorrichtung 1 ergriffenen und bewegten Objekts 2. Die Bandbreite der durch die erfindungsgemäße Greifvorrichtung 1 mögliche Erfassung von Relativgeschwindigkeiten 26 eines zu bewegenden Objekts 2 wird dabei nur schematisch angedeutet. Die Greifvorrichtung 1 bzw. das Greifmodul 4 kann sich entlang bzw. um mehrere Achsen bewegen. Die Bewegungen des Greifmoduls 4 bzw. der Greifvorrichtung 1 im Raum werden entsprechend eines vorgebbaren Bewegungsablaufs von der Anlagensteuerung 3 gesteuert und als Bewegungsdaten 40 von nicht weiter dargestellten Sensoren erfasst und der Anlagensteuerung 3 zumindest periodisch zur Verfügung gestellt.

In den Fig. 2a und 2b wird beispielhaft eine Verfahrgeschwindigkeit 30 des Greifmoduls 4 um eine gedachte Vertikalachse beschrieben. Diese Winkelgeschwindigkeit des gezeigten Beispiels ist jedoch so zu verstehen, dass auch lineare Bewegungen des Greifmoduls 4 in analoger Weise eine Verfahrgeschwindigkeit 30 bzw. korrespondierende Bewegungsrichtungen aufweisen können. Die in der Anlagensteuerung 3 verfügbaren Bewegungsdaten 40 umfassen somit die lokalen Geschwindigkeiten und die korrespondierende Position der Greifvorrichtung 1 bzw. des Greifmoduls 4 zu einem bestimmten Zeitpunkt. Davon abweichende Relativbewegungen und/oder Relativgeschwindigkeiten 26 können somit analog zu den gezeigten beispielhaften Situationen vom Fachmann abgeleitet werden.

Die in Fig. 2 punktiert dargestellten Sensorelemente 8 sind in einer der beiden dargestellten Greifbacken 5 des Greifmoduls 4 angeordnet und erlauben eine Erfassung der Objektdaten des ergriffenen und bewegten Objekts 2. Es kann aus der beispielhaften Anordnung der Sensorelemente 8 ersehen werden, dass die benachbarte Anordnung mit jeweils dem Aufnahmeraum 6 zugewandten Sensorbereichen 9, eine Redundanzschaltung ermöglicht.

Fig. 2a und 2b stellen anhand eines Blechs die beabsichtigte Bewegung eines Objekts 2 mit einer Verfahrgeschwindigkeit 30 des Greifmoduls 4 dar, wobei es zu einer Relativbewegung und/oder Relativgeschwindigkeit 26 in Zentrifugalrichtung 35 kommt.

Die Darstellung in Fig. 2a zeigt dabei exemplarisch, dass das Objekt 2 bzw. das Blech in Zentrifugalrichtung 35 aus seiner ursprünglichen Aufnahmeposition, welche strichliert dargestellt ist, herausbewegt wird. Die Situation ist so dargestellt, dass die Relativbewegung mit einer Relativgeschwindigkeit 26 des Objekts 2 relativ zur Greifbacke 5 bzw. zum Greifmodul 4 im Wesentlichen linear erfolgt. Die Relativbewegung und/oder Relativgeschwindigkeit 26 des Blechs erfolgt dabei zur Bewegungsrichtung der Greifvorrichtung 1 orthogonal und kann von beiden punktiert gezeichneten Sensorelementen 8 erfasst werden.

In Fig. 2b ist beispielhaft ein Grenzfall dargestellt, bei dem das Objekt 2, bzw. ein Ende des Blechs, aus dem Greifmodul 4 in Richtung der Verfahrgeschwindigkeit 30 herausgedreht wird. Dabei kommt es zu einer Relativbewegung und/oder. Relativgeschwindigkeit 26 welche einer Rotations- oder Drehbewegung um die Achse eines der Sensorelemente 8 bzw. seinen Sensorbereich 9 kommt. Diese Relativbewegung 26 kann jedoch effizient durch die signalmäßige Redundanzschaltung mit dem zweiten, benachbarten Sensorelement 8 erfasst werden, um geeignete Gegenmaßnahmen einzuleiten.

Die Fig. 3a bis 3d stellen exemplarisch einige Ausführungsformen von Greifmodulen 4 mit unterschiedlich angeordneten bzw. ausgebildeten Greifbacken 5 dar. Es ist eine Klemmachse 11 dargestellt um welche zumindest eine Greifbacke 5 herum bzw. relativ zu welcher Klemmachse 11 zumindest eine Greifbacke 5 verschiebbar ausgebildet ist. Alle dargestellten Ausführungsbeispiele weisen zwei Sensorelemente 8 auf, obwohl die Erfindung mit lediglich einem bzw. auch mehreren Sensorelementen 8 durchführbar ist. Die Darstellungen bilden auch Greifbacken 5 ab, welche gabelförmig ausgebildet sind, was im Rahmen der Erfindung auch für sämtliche Ausführungsformen von Greifbacken 5 Übertrag ist.

In Fig. 3a ist ein Zangengreifer 12 dargestellt, wobei eine Greifbacke 5 mit zwei Sensorelementen 8 ausgestattet ist und zu welcher eine korrespondierende Greifbacke 5 um die Klemmachse 11 drehbar angeordnet ist. Analog dazu ist der Zangengreifer 12 in Fig. 3b mit zwei zueinander zwei um die Klemmachse 11 drehbaren Greifbacken 5 bzw. Zangen 14 ausgebildet. In beiden Fällen wird im Bereich des Zusammentreffens der beiden Greifbacken 5, worin ein Objekt 2 aufgenommen werden kann, der Aufnahmeraum 6 ausgebildet.

In Fig. 3c und 3d sind zwei mögliche Ausführungsformen für Plattengreifer 13 abgebildet, bei denen die Klemmachse 11 mit der Stellung der Greifbacken 5 bzw. Platten 15 variieren kann. Die Ausführungsform in Fig. 3c weist lediglich eine verschiebbare Greifbacke 5 bzw. Platte 15, welche zu der Klemmachse 11 und der korrespondierenden Platte 15 parallel verschiebbar ist. Diese relativ einfache Form bietet kostentechnische Vorteile. In Fig. 3d ist ein Beispiel zwei zueinander parallel verschiebbarer Greifbacken 5 bzw. Platten 15.

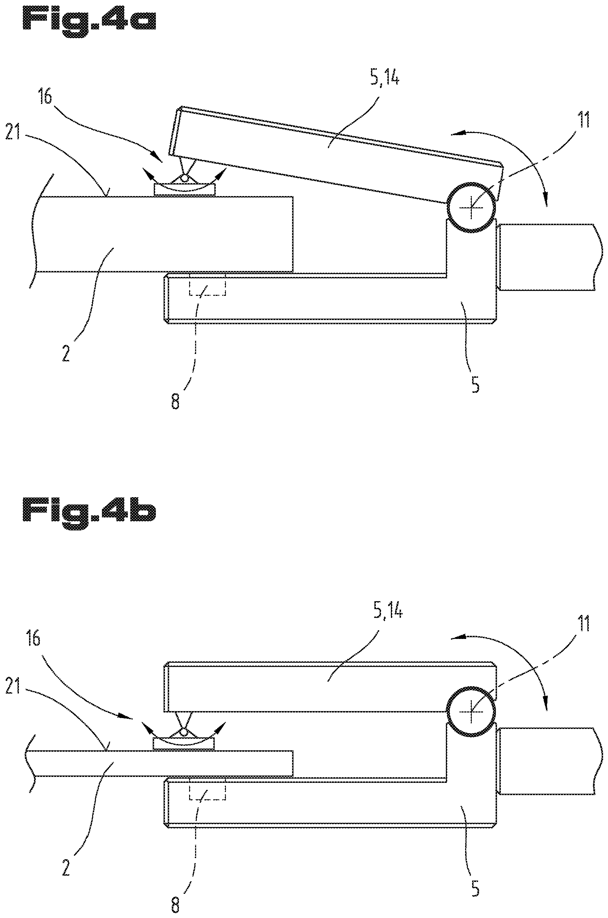

Die Fig. 4a bis 4d stellen einige mögliche Ausführungsbeispiele dar für Greifmodule 4 deren Innenflächen 10 der Greifbacken 5 zumindest teilweise parallel zueinander ausrichtbar ausgebildet sind. Diese Ausführungsformen sind völlig kompatibel mit den Ausführungsformen der Fig. 1 bis Fig. 3, insbesondere jedoch vorteilhaft bei zangenförmigen Greifbacken 5 bzw. Zangen 14.

Fig. 4a bis 4d stellen sehr einfache Beispiele eines Zangengreifers dar, welcher eine um die Klemmachse 11 drehbare Greifbacke 5 bzw. Zange 14 aufweisen. Um unterschiedliche Blechstärken bzw. Objektdurchmesser oder -stärken zu kompensieren ist es möglich durch Winkelkorrekturmittel 16 eine parallele Auflage -bzw. Angriffsfläche für die Klemmkraft 7 zwischen der beweglichen Greifbacke 5 bzw. der Zange 14 zum Objekt 2 bzw. Blech zu erreichen. Die Funktionalität des zumindest einen strichliert dargestellten Sensorelements 8 wird durch diese Maßnahme sichergestellt, da eine parallele Objektoberfläche 21 gegenüber dem Sensorbereich 9 eine hohe Messsicherheit und Präzision sicherstellt.

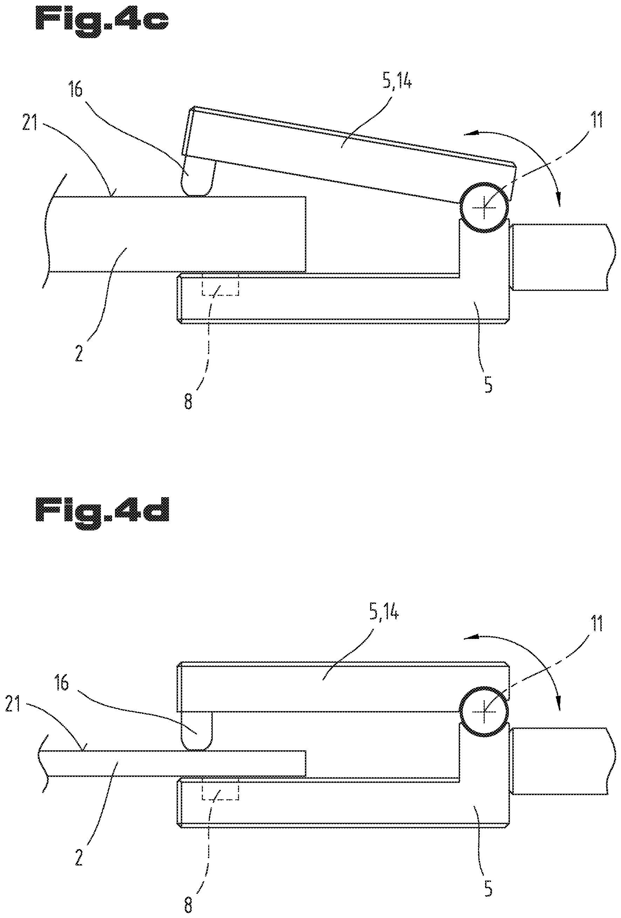

Das Winkelkorrekturmittel 16 kann sehr einfach durch eine schwenkbare Griffplatte, wie in Fig. 4a und 4b dargestellt, ausgebildet sein. Anstatt der Innenfläche 10 der Zange 14 ist somit das Winkelkorrekturmittel 16 immer in einem parallelen Kontakt zu zumindest einem Teil der Objektoberfläche 21, da es sich der Ausrichtung der Greifbacke 5 und/oder der Objektoberfläche 21 anpasst. Wie in Fig. 4c und Fig. 4d kann ein Winkelkorrekturmittel 16 auch als elastischer Körper an der Innenfläche einer Greifbacke 5 bzw. Zange 14 ausgebildet sein und sich bei einer Schließbewegung der Greifbacken 5 zumindest entlang einer Kontaktlinie, bevorzugt Kontaktfläche, parallel zur Objektoberfläche 21 des zu ergreifenden Objekts 2 anpassen. Wie in den beispielhaften Darstellungen kann ein dünneres Blech oder auch Objekt 2, wie in Fig. 4b und 4d gezeigt, genauso gut kontaktiert und mit einer Klemmkraft 7 gehalten werden wie ein vergleichsweise dickes Blech bzw. Objekt 2, wie in Fig. 4a und 4c dargestellt.

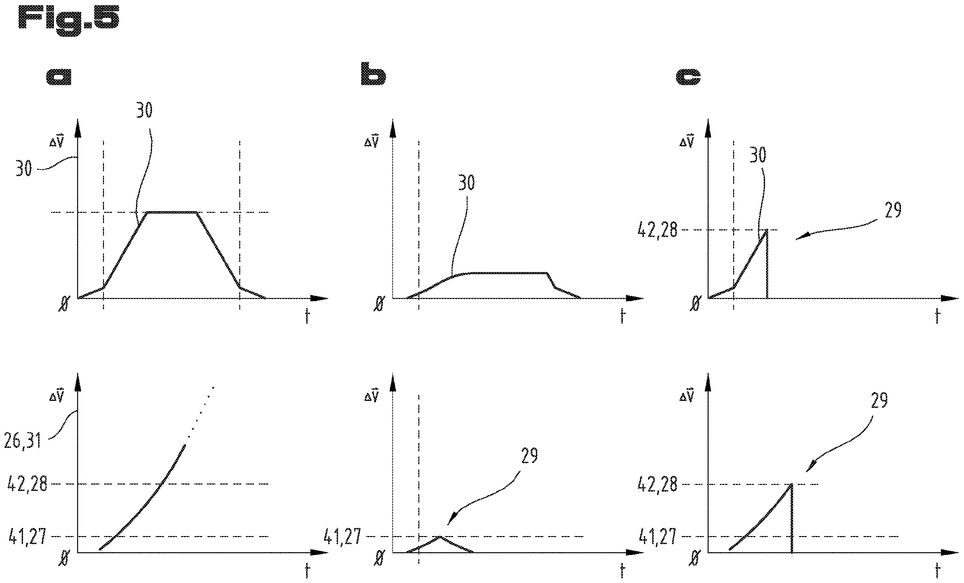

Die Funktionsweise der erfindungsgemäßen Greifvorrichtung 1 bzw. des Verfahrens soll anhand von Fig. 5a bis 5c kurz erläutert werden. Die y-Achsen geben korrelierende Geschwindigkeiten bzw. Bewegungen an, während die x-Achsen die gemeinsame Zeitachse für die jeweiligen Teilabbildungen definieren. In der oberen Reihe der jeweiligen Teilfigur sind mögliche Verfahrgeschwindigkeiten 30 bzw. erfasste Bewegungsdaten 40 des Greifmoduls 4 als Funktion der Zeit abgebildet. Diese werden von nicht dargestellten Sensoren der Greifvorrichtung 1 erfasst und der Anlagensteuerung 3 zugänglich gemacht. In der unteren Reihe sind damit zeitlich korrespondierende Relativgeschwindigkeiten 26 bzw. die gemessenen Objektdaten 31 schematisch dargestellt, welche vom zumindest einen Sensorelement 8 des Greifmoduls 4 erfasst und ebenfalls an die Anlagensteuerung 3 übermittelt werden. Die strichlierten Linien deuten Bezugslinien zur besseren Orientierung an.

Die Fig. 5a stellt einen möglichen Fall dar, in der die Bewegung des Greifmoduls 4 zu einem Entgleiten des Objekts 2 führt. Es wird in einem ersten Schritt, was dem Abtransport eines ergriffenen Objekts 2 von einer Entnahme 37 entspricht, die Verfahrgeschwindigkeit 30 langsam erhöht. Nach dieser Entnahme- oder Anfahrphase wird die Verfahrgeschwindigkeit 30 bis zu einem Maximum erhöht, das für eine gewisse Zeit gehalten wird um möglichst schnell das Objekt 2 an seinen Bestimmungsort zu transportieren. In dieser Phase, wird vom Sensorelement 8 eine Relativgeschwindigkeit 26 erfasst, welche als Abweichung der korrespondierenden unteren Teilfigur von der Nulllinie ersehen werden kann. Das Objekt 2 wird offenbar durch die Bewegung des Greifmoduls 4 dazu gebracht eine Relativbewegung und/oder Relativgeschwindigkeit 26 auszuführen. Die gemessenen Objektdaten 31 lassen durch die zunehmende Steigung darauf schließen, dass sich das Objekt 2 immer schneller relativ zur Greifbacke 5, und somit zum Greifmodul 4 respektive der Greifvorrichtung 1 bewegt, bis zu einem Punkt, an dem es die Greifvorrichtung 1 unkontrolliert verlässt, was durch die gepunktete Linie angedeutet ist. Die Bewegungsdaten 40 des Greifmoduls 4 lassen darauf schließen, dass keine Gegenmaßnahmen 29 eingeleitet wurden, da die Verfahrgeschwindigkeit 30 des Greifmoduls 4 in der oberen Teilfigur von Fig. 5a vorerst konstant bleibt, um dann beim Nähern der Zielposition zu verlangsamen. Die Darstellung in Fig. 5a stellt somit den unerwünschten Fall des unkontrollierten Verlustes eines Objekts 2 bzw. Blechs aus der Greifvorrichtung dar.

Fig. 5b zeigt hingegen, dass bei einer Erhöhung der Verfahrgeschwindigkeit 30, also einer ersten Zunahme der Bewegungsdaten 40 beim Anfahren des Greifmoduls 4 in der oberen Teilfigur, eine korrespondierende Relativgeschwindigkeit 26 durch die Erfassung der Objektdaten 31 erfolgt. In diesem Fall wird bei Erreichen eines ersten Grenzwerts 41, zumindest eine Gegenmaßnahme der ersten Stufe 27 eingeleitet. Im konkreten Beispiel wird die Verfahrgeschwindigkeit 30 reduziert und auf einem konstanten Wert gehalten um die Relativbewegung und/oder Relativgeschwindigkeit 26 des Objekts 2 zu stoppen. Im Vergleich zum Beispiel in Fig. 5a liegt die Verfahrgeschwindigkeit 30 auf einem niedrigeren, konstanten Niveau und wird länger gehalten um den gleichen Verfahrweg zu erreichen.

Es hat sich jedoch als vorteilhaft erwiesen, wenn bereits bei einer Abweichung von mehr als 0.1 mm/s (Millimeter/Sekunde) als erstem Grenzwert 41 zumindest eine Gegenmaßnahme einer ersten Stufe eingeleitet wird. Gegenmaßnahmen der ersten Stufe werden also bei Abweichungen von 0.1 bis etwa 2.0 mm/s, bevorzugt bis 1.0 mm/s, eingeleitet, während bei Abweichungen von mehr als 2. 1 mm/s, bevorzugt bereits 1.1 mm/s, als zweitem Grenzwert 42 zumindest eine Gegenmaßnahme einer zweiten Stufe eingeleitet wird. Ein solcher Fall ist schematisch in Fig. 5c dargestellt. Analog zu den Fig. 5a und 5b wird die Verfahrgeschwindigkeit 30 des Greifmoduls 4 erhöht. Der Anstieg der Relativgeschwindigkeit 26 des Objekts 2 ist jedoch sehr schnell es reichen die bei Erreichen des ersten Grenzwerts 41 eingeleiteten Gegenmaßnahmen 29 der ersten Stufe nicht aus, wodurch die Relativgeschwindigkeit 26 weiter zunimmt und der zweite Grenzwert 42 erreicht wird. Dies leitet die zumindest eine Gegenmaßnahme 29 zweiter Stufe 28 ein, wodurch es zu einem abrupten Stopp des Greifmoduls 4 und somit einem Anhalten der Verfahrgeschwindigkeit 30 kommt. Dies wird von einem Stopp der Relativgeschwindigkeit 26 gefolgt und verhindert effizient ein Entgleiten des Objekts 2 aus dem Greifmodul 4.

Die Diskussion der Einleitung und Abfolge von Gegenmaßnahmen 29 der Fig. 5 in Bezug auf das Erreichen von ersten und zweiten Grenzwerten 41,42 ist sinngemäß für das Erfassen eines Fremdköpers im Warnbereich 32 bzw. Stoppbereich 33 der Greifvorrichtung 1 zu übertragen.

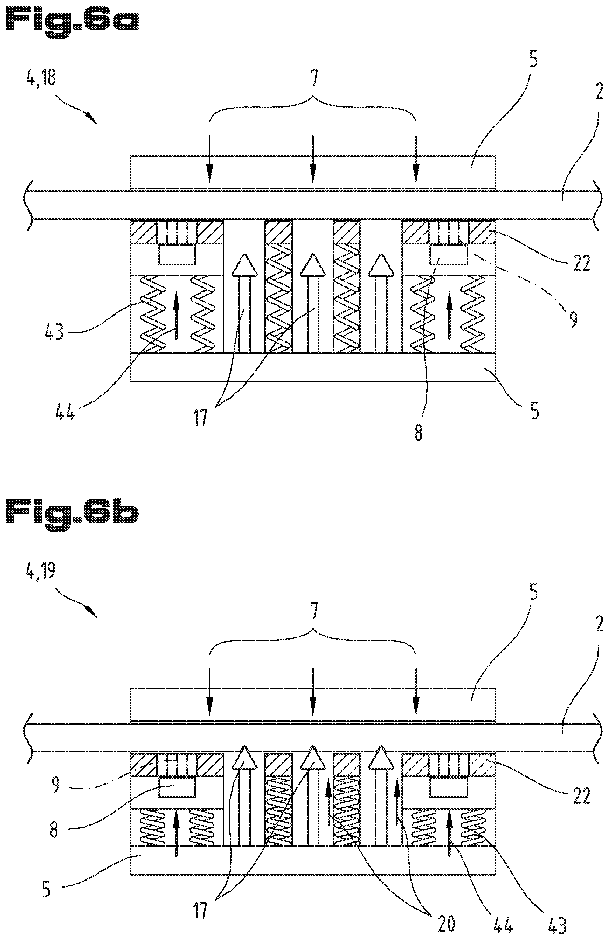

Zur Erhöhung der Sicherheit ist an oder innerhalb zumindest einer Greifbacke 5 ein Sicherungsmittel 17 angeordnet Wie in den Fig. 6a und 6b in einer Schnittdarstellung gezeigt, üben die beiden Greifbacken 5 eine Klemmkraft 7, welche der Übersicht halber nur einseitig dargestellt ist, auf das Objekt 2 bzw. dessen Objektoberfläche 21. Des Weiteren ist klar ersichtlich, dass zwei Sensorelemente 8 in der jeweils unteren Greifbacke 5 angeordnet sind und deren Sensorbereich 9 dem Objekt 2 zugewandt ist. In der beispielhaften Ausführungsform von Fig. 6 ist an der dem Objekt 2 zugewandten Seite der Greifbacke 5 ein Reibbelag 22 zur Erhöhung der Reibung zwischen Greifbacke 5 und Objekt 2 angebracht.

Aus Fig. 6a kann die Normal- oder Ruhestellung 18 des Sicherungsmittels 17 ersehen werden, in der es gegenüber dem Reibbelag 22unterhalb verborgen angeordnet ist um die Objektoberfläche 21 nicht zu beschädigen. Die dargestellte Form des Sicherungsmittels 17 als Dom, sowie die vorgespannten, als Federelemente dargestellten, Federmittel 43 sind lediglich als beispielhafte einfache, mechanische Ausführung für die Funktionsweise des Sichenmgsmittels 17 bzw. des gelagerten Reibbelags 22 zu verstehen. Das Federmittel 43 kann zur Aufbringung der Federkraft 44 auf den Reibbelag 22 ebenso durch einen pneumatischen, hydraulischen und/oder elektromechanischen Antrieb ersetzt oder damit kombiniert werden. Ebenso ist es denkbar, dass das Federmittel 43 mit einem federelastischen Reibbelag 22 einteilig zur Aufbringung der Federkraft 44 ausgebildet ist. Die Wirkrichtung der Klemmkraft 7 ist zugunsten der Übersicht nur von einer Seite gezeichnet. Dem Fachmann ist jedoch klar, dass die Klemmkraft 7 von beiden Greifbacken 5 auf das Objekt 2 aufgebracht werden kann.

Bei Erreichen eines ersten Grenzwerts 41 oder zweiten Grenzwerts 42 kann als eine Gegenmaßnahme 29 das zumindest eine Sicherungsmittel 17 in eine Aktivstellung 19 gebracht werden und relativ zu zumindest Teilen des Reibbelags 22 der Greifbacke 5 schlagartig hervortreten um mit einer vorgebbaren Sicherungskraft 20 mit zumindest Teilen der Objekt Oberfläche 21 in Kontakt zu treten. Wie in Fig. 6a dargestellt befindet sich der Reibbelag 22 bzw. das Sicherungsmittel 17 in der Ruhestellung 18 solange die Klemmkraft 7 auf das Objekt 2 geringer ist als die Federkraft 44 auf den Reibbelag 22. Eine Erhöhung der Klemmkraft 7 bis zur Höhe der Federkraft 44 bewirkt eine nicht dargestellte, zerstörungsfreie, Kontaktierung des Objekts 2 durch das Sicherungsmittel 17, wodurch eine zusätzliche Sicherungskraft 20 auf zumindest Teile der Objektoberfläche 21 aufgebracht werden kann. Die zusätzliche Sicherungskraft 20 ermöglicht ein Abbremsen der Relativbewegung und/oder Relativgeschwindigkeit 26 eines Objekts 2, wie z.B. in Fig. 5b dargestellt.

In Fig. 6b ist ein weiteres Beispiel für eine mögliche Aktivstellung 19 des Sicherungsmittels 17 dargestellt, wobei das zumindest eine Sicherungsmittel 17 in zumindest Teile der Objektoberfläche 21 eindringt. Dies wird durch eine deutliche, schlagartige Erhöhung der Klemmkraft 7 relativ zur Federkraft 44 erreicht. Hierdurch wird eine plastische Deformation der ergriffenen Teile der Objektoberfläche 21 eingeleitet, was zusätzlich zur reibschlüssigen Verbindung der Greifbacken 5 und des Objekts 2 eine formschlüssige Verbindung bewirkt. Diese Gegenmaßnahme 29 hängt von der Höhe der Klemmkraft 7 ab und kann ebenso wie eine vorgebbare Sicherungskraft 20 in der Anlagensteuerung 3 hinterlegt werden.

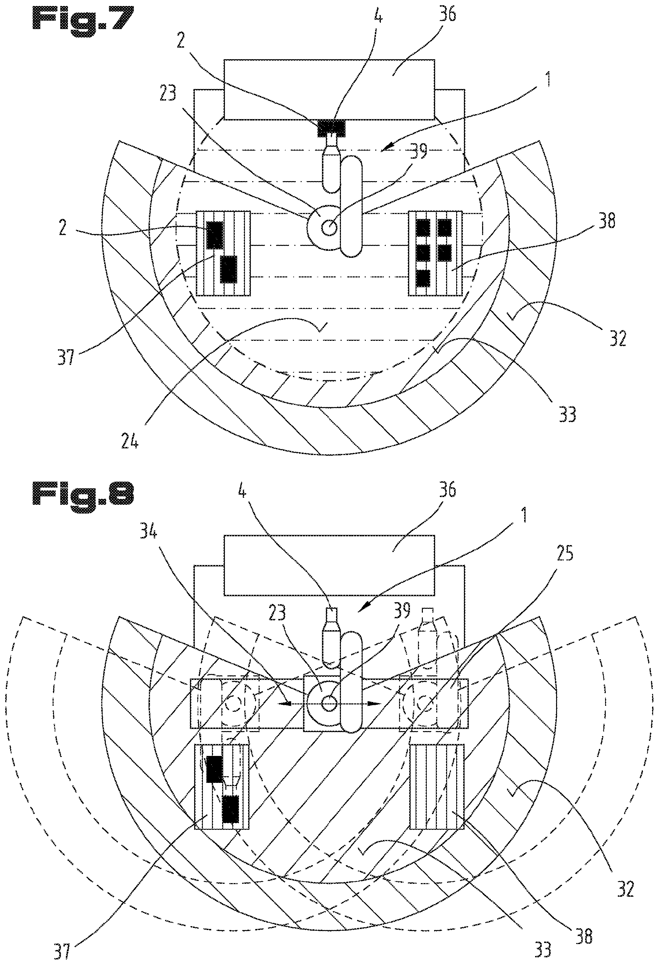

In den Fig. 7 und Fig. 8 sind eine weitere und gegebenenfalls für sich eigenständige Ausführungsformen der Greifvorrichtung 1 gezeigt, wobei wiederum für gleiche Teile gleiche Bezugszeichen wie in den vorangegangenen Fig. 1 bis Fig. 6 verwendet werden. Um unnötige Wiederholungen zu vermeiden, wird auf die detaillierte Beschreibung der vorangegangenen Figuren, insbesondere die Diskussion der Einleitung und Abfolge von Gegenmaßnahmen 29 der Fig. 5 in Bezug auf das Erreichen von ersten und zweiten Grenzwerten 41,42 verwiesen.

In den Fig. 7 und Fig. 8 ist beispielhaft ein automatisiertes Bearbeitungszentrum, mit einer Biegemaschine 36 mit zugeordnetem, mehrachsigen Manipulator 23 für zu bewegende Teile bzw. Objekte 2 dargestellt. Des Weiteren sind eine Entnahme 37 mit darauf angeordneten Objekten 2, also dem Halbzeug, dargestellt, sowie eine Ablage 38 für die fertig bearbeiteten Objekte 2. Der Bewegungsbereich 24 der Greifvorrichtung 1, welche den mehrachsigen Manipulator 23 umfasst, ist schraffiert dargestellt. Innerhalb dieses Bewegungsbereichs 24 ist eine Bewegung des Greifmoduls 4 mit oder ohne aufgenommenem Objekt 2 möglich.

Um erfindungsgemäß durch die Verwendung eines Greifmoduls 4 mit zumindest einem Sensorelement 8 auf Schutzzäune verzichten zu können, wird die Erfassung von unbeabsichtigt eintretenden Fremdkörpern, insbesondere Personen, innerhalb des Bearbeitungsbereichs durch einen Sicherheitsscanner 39 vorgenommen. Anstatt eines das Bearbeitungszentrum umgebenden Schutzzauns, ist nur ein die Biegemaschine 36 flankierender Teil eines Schutzzauns dargestellt.

Wie in Fig. 7 und Fig. 8 ersichtlich grenzen an den Bewegungsbereich 24 der Greifvorrichtung 1, ausgehend von der vertikalen Drehachse des Manipulators 23 ein Stoppbereich 33 und danach ein Warnbereich 32 an. Der weiter außen beginnende Warnbereich 32 definiert einen Bearbeitungsbereich, innerhalb dessen bei Detektion eines Fremdkörpers die gleichen Maßnahmen eingeleitet werden, wie beim Erreichen des ersten Grenzwerts 41 einer Relativbewegung und/oder Relativgeschwindigkeit 26 des Objekts 2. Somit wird hierbei zumindest eine Gegenmaßnahme der ersten Stufe eingeleitet. Sinngemäß ist die Erfassung eines Fremdköpers im weiter innenliegenden Stoppbereich 33 der Greifvorrichtung 1 auf das Erreichen des zweiten Grenzwerts 42 und die Einleitung zumindest einer Gegenmaßnahme der zweiten Stufe zu übertragen.

In Fig. 8 ist ein weiteres Ausführungsbeispiel gezeigt, wobei eine Greifvorrichtung 1 einen entlang einer Verfahrstrecke 25 in eine Verfahrrichtung 34 seitwärts, also horizontal, beweglichen Manipulator 23 umfasst. Die Greifvorrichtung 1 weist somit unterschiedlich zum einem ortsfesten Betrieb, mehrere Warn- 32, Stopp- 33 bzw. Bearbeitungsbereiche auf, welche schematisch an den Eckpunkten der Verfahrstrecke 25 dargestellt sind. Der Bewegungsbereich 24, sowie der Stoppbereiche 33 und der Warnbereich 32 werden dementsprechend entlang der Verfahrstrecke 25, mit der Position der Greifvorrichtung 1 korrespondierend, mitbewegt und haben daher somit eine Art beweglichen Fixpunkt. Zur Erleichterung der Übersicht ist in Fig. 8 kein Bewegungsbereich 24 dargestellt, jedoch mit Verweis auf Fig. 7 hiermit einbezogen. Es wird durch die Erweiterung des Bearbeitungsbereichs in eine Verfahrrichtung 34 bzw. entlang einer Verfahrstrecke 25 ermöglicht, dass selbst während des Prozesses ein Austausch von bereitgestellten Objekten 2, also z.B. Halbzeug oder Fertigteilen, durchgeführt werden kann, wenn sich der Bewegungsbereich 24 und/oder der Warnbereich 32 und/oder der Stoppbereich 33 gerade entfernt befinden und somit ein Bereich des Bearbeitungszentrums gefahrlos betretbar ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Greifvorrichtung | 31 | Objektdaten |
| 2 | Objekt | 32 | Warnbereich |
| 3 | Anlagensteuerung | 33 | Stoppbereich |
| 4 | Greifmodul | 34 | Verfahrrichtung |
| 5 | Greifbacke | 35 | Zentrifugalrichtung |
| 6 | Aufnahmeraum | 36 | Biegemaschine |
| 7 | Klemmkraft | 37 | Entnahme |
| 8 | Sensorelement | 38 | Ablage |
| 9 | Sensorbereich | 39 | Sicherheitsscanner |
| 10 | Innenfläche | 40 | Bewegungsdaten |
| 11 | Klemmachse | 41 | erster Grenzwert |
| 12 | Zangengreifer | 42 | zweiter Grenzwert |
| 13 | Plattengreifer | 43 | Federmittel |
| 14 | Zange | 44 | Federkraft |
| 15 | Platte | | |
| 16 | Winkelkorrekturmittel | | |
| 17 | Sicherungsmittel | | |
| 18 | Ruhestellung | | |
| 19 | Aktivstellung | | |
| 20 | Sicherungskraft | | |
| 21 | Objektoberfläche | | |
| 22 | Reibbelag | | |
| 23 | Manipulator | | |
| 24 | Bewegungsbereich | | |
| 25 | Verfahrstrecke | | |
| 26 | Relativgeschwindigkeit | | |
| 27 | erste Stufe | | |
| 28 | zweite Stufe | | |
| 29 | Gegenmaßnahme | | |
| 30 | Verfahrgeschwindigkeit | | |

## Patentansprüche

1. Greifvorrichtung (1) zur überwachten Bewegung von Objekten (2), bevorzugt Blechen, umfassend
eine Anlagensteuerung (3), welche zur Verarbeitung von Objektdaten (31) und Steuerung eines Greifmoduls (4) ausgebildet ist,
wobei das Greifmodul (4), zumindest zwei miteinander kooperierend ausgebildete Greifbacken (5) aufweist,
welche einen dazwischenliegenden Aufnahmeraum (6) zur Aufnahme von zumindest Teilen eines zu überwachenden und transportierenden Objekts (2) bilden,
und die Greifbacken (5) derart ausgebildet sind, dass durch Aufbringen einer vorgebbaren Klemmkraft (7) zumindest eine reibschlüssige Verbindung zwischen den Greifbacken (5) und zumindest Teilen des Objekts (2) ermöglicht wird wodurch das Objekt (2) bewegbar ist, sowie zumindest ein Sensorelement (8) zur Erfassung der Objektdaten (31) des zu bewegenden und überwachenden Objekts (2),
wobei das zumindest eine Sensorelement (8) an zumindest einer Greifbacke (5) mit seinem Sensorbereich (9) dem Aufnahmeraum (6) zugewandt angeordnet und derart ausgebildet ist durch zumindest zeitweilige Erfassung der Objektdaten (31) eine Relativbewegung und/oder Relativgeschwindigkeit (26) des Objekts (2) bezüglich zumindest einer der Greifbacken (5) zu detektieren,
wobei an zumindest einer dem Aufnahmeraum (6) zugewandten Innenfläche (10) zumindest einer Greifbacke (5) ein Reibbelag (22), zur Erhöhung der Reibung der Greifbacke (5) zu zumindest Teilen der Objektoberfläche (2), angeordnet ist , **dadurch gekennzeichnet,**
**dass** zumindest eine Greifbacke (5) zumindest ein daran ausgebildetes Sicherungsmittel (17) umfasst und der Reibbelag (22) in Richtung der Klemmkraft (7), zwischen einer Ruhestellung (18) und einer Aktivstellung (19), beweglich und mit einer Federkraft (44) vorgespannt ausgebildet ist,
wobei in der Ruhestellung (18) der Reibbelag (22) das Sicherungsmittel (17) überragend angeordnet ist,
und in der Aktivstellung (19), zur Ausübung einer zumindest punktförmigen Sicherungskraft (20) auf zumindest Teile einer Objektoberfläche (2) der Reibbelag (22) relativ zum Sicherungsmittel (17) zurückversetzt angeordnet ist.

2. Greifvorrichtung (1) nach Anspruch 1, **dadurch gekennzeichnet, dass** das Sensorelement (8) dazu ausgebildet ist zumindest periodisch eine Position und/oder eine Lage des Objekts (2) als Objektdaten (31) zu erfassen.

3. Greifvorrichtung (1) nach Anspruch 1 oder 2, **dadurch gekennzeichnet, dass** das Sensorelement (8) als zumindest ein optoelektronische, bevorzugt laseroptisches und/oder akustisches und/oder kapazitives und/oder induktives Sensorelement (8) ausgebildet ist.

4. Greifvorrichtung (1) nach einem der vorhergehenden Ansprüche, **dadurch gekennzeichnet, dass** zwei Sensorelemente (8) in einer signalmäßigen Redundanz mit der Anlagensteuerung (3) verbunden angeordnet sind.

5. Greifvorrichtung (1) nach einem der vorhergehenden Ansprüche, **dadurch gekennzeichnet, dass** die Innenflächen (10) der Greifbacken (5) zumindest teilweise parallel zueinander ausrichtbar ausgebildet sind.

6. Greifvorrichtung (1) nach Anspruch 5, **dadurch gekennzeichnet, dass** zumindest eine Greifbacke (5) um eine Klemmachse (11) drehbar ausgebildet ist und zur Erhöhung der Klemmkraft am zu greifenden Objekt zumindest ein Winkelkorrekturmittel (16), aufweist.

7. Greifvorrichtung (1) nach Anspruch 6, **dadurch gekennzeichnet, dass** die Greifvorrichtung (1) als Zangengreifer (12) ausgebildet ist, welcher bevorzugt zwei um die Klemmachse (11) drehbare Greifbacken (5) bzw. Zangen (14) aufweist.

8. Greifvorrichtung (1) nach Anspruch 5, **dadurch gekennzeichnet, dass** zumindest eine Greifbacke (5) parallel zur zweiten Greifbacke (5) verschiebbar ausgebildet ist.

9. Greifvorrichtung (1) nach Anspruch 8, **dadurch gekennzeichnet, dass** die Greifvorrichtung (1) als Plattengreifer (13) ausgebildet ist, welcher zwei normal zu einer Klemmachse (11) bewegliche Greifbacken (5) bzw. Platten (15) aufweist.

10. Greifvorrichtung (1) nach einem der Ansprüche 1 bis 9, **dadurch gekennzeichnet, dass** die Ruhestellung (18) bei einer relativ zur Federkraft (44) niedrigeren Klemmkraft einnehmbar ist
und die Aktivstellung (19) bei einer relativ zur Federkraft (44) höheren Klemmkraft einnehmbar ist.

11. Greifvorrichtung (1) nach einem der vorhergehenden Ansprüche, **dadurch gekennzeichnet, dass** das zumindest eine Sicherungsmittel (17) zur Ausübung der zumindest punktförmigen Sicherungskraft (20) auf zumindest Teile der Objektoberfläche (2) dorn- und/oder hakenförmig ausgebildet ist.

12. Greifvorrichtung (1) nach einem der vorhergehenden Ansprüche, **dadurch gekennzeichnet, dass** der Reibbelag (22) durch ein hydraulisches, pneumatisches, mechanisches und/oder elektromechanisches Federmittel beweglich ausgebildet ist.

13. Greifvorrichtung (1) nach einem der vorhergehenden Ansprüche, **dadurch gekennzeichnet, dass** das Greifmodul (4) als Greifwerkzeug eines zumindest zweiachsigen beweglichen Manipulators (23), bevorzugt eines mehrachsigen Roboters, ausgebildet ist.

14. Greifvorrichtung (1) nach Anspruch 13, **dadurch gekennzeichnet, dass** der Manipulator (23) entlang einer Verfahrstrecke (25) zur Erhöhung eines Bewegungsbereiches (24) des Manipulators (23), beweglich ausgebildet ist.

15. Greifvorrichtung (1) nach einem der Ansprüche 13 oder 14, **dadurch gekennzeichnet, dass** der zumindest zweiachsig bewegliche Manipulator (23) zumindest einen mit der Anlagensteuerung (3) verbundenen, laseroptischen Sicherheitsscanner (39), zur Erfassung eines möglichen Fremdkörpers in einem vorgebbaren Warnbereich (32) und einem vorgebbaren Stoppbereich (33), aufweist.

16. Verfahren zur überwachten Bewegung von Objekten (2), bevorzugt Blechen, umfassend die Verfahrensschritte:
- Bereitstellen einer Greifvorrichtung (1) nach einem der Ansprüche 1 bis 15, umfassend ein Greifmodul (4), welches zumindest zwei miteinander kooperierend ausgebildete Greifbacken (5) aufweist, welche einen dazwischenliegenden Aufnahmeraum (6) zur Aufnahme von zumindest Teilen eines zu überwachenden und transportierenden Objekts (2) bilden, und die Greifbacken (5) derart ausgebildet sind, dass durch Aufbringen einer vorgebbaren Klemmkraft (7) zumindest eine reibschlüssige Verbindung zwischen den Greifbacken (5) und zumindest Teilen des Objekts (2) ermöglicht wird wodurch das Objekt (2) bewegbar ist, sowie zumindest ein Sensorelement (8) zur Erfassung von Objektdaten (2) des zu bewegenden und überwachenden Objekts (2), wobei
das zumindest eine Sensorelement (8) an zumindest einer Greifbacke (5) mit seinem Sensorbereich (9) dem Aufnahmeraum (6) zugewandt angeordnet und dazu ausgebildet ist durch zumindest zeitweilige Erfassung der Objektdaten (2) eine Relativbewegung und/oder Relativgeschwindigkeit (26) des Objekts (2) bezüglich zumindest einer der Greifbacken (5) zu detektieren;
- Bereitstellen zumindest des zu bewegenden Objekts (2);
- Greifen des zu bewegenden Objekts (2) mittels Greifbacken (5) der Greifvorrichtung (1);
- Bewegung des Objekts (2) entsprechend eines vorgebbaren Bewegungsablaufs, wobei
-- eine Erfassung von Bewegungsdaten (40) der Greifvorrichtung (1) erfolgt und
-- eine zumindest periodische Auswertung der Bewegungsdaten (40) von einer Anlagensteuerung (3) erfolgt und
-- eine Erfassung von Objektdaten (31) des ergriffenen und bewegten Objekts (2) mittels zumindest eines Sensorelements (8) erfolgt und
-- eine zumindest periodische Auswertung der Objektdaten (2) in der Anlagensteuerung (3) erfolgt; und
-- ein zumindest periodischer Abgleich der Objektdaten (2) mit den Bewegungsdaten (40) dazu genutzt wird eine etwaige Abweichung, welcher einer Relativbewegung und/oder Relativgeschwindigkeit (26) des zu bewegenden Objekts (2) relativ zu zumindest einer der Greifbacken (5) entspricht, zu detektieren und wobei
--- keine Abweichung einem Normalbetrieb entspricht und der vorgegebene Bewegungsablauf beendet wird; oder
--- bei einer detektierten Abweichung eine Einleitung von zumindest einer, bevorzugt mehreren, Gegenmaßnahme (29) durch die Anlagensteuerung (3) erfolgt.

17. Verfahren nach Anspruch 16, **dadurch gekennzeichnet, dass** als Objektdaten (2) zumindest periodisch die Position und/oder die Lage des Objekts (2) vom Sensorelement (8) erfasst werden.

18. Verfahren nach Anspruch 16 oder 17, **dadurch gekennzeichnet, dass** das Sensorelement (8) die Objektdaten (2) zumindest optoelektronisch, bevorzugt laseroptisch und/oder akustisch und/oder kapazitiv und/oder induktiv ermittelt.

19. Verfahren nach einem der Ansprüche 16 bis 18, **dadurch gekennzeichnet, dass** die Einleitung der zumindest einen Gegenmaßnahme (29) abhängig vom Ausmaß der Relativgeschwindigkeit (26) zweistufig erfolgt, wobei bei Erreichen eines ersten Grenzwerts (41) zumindest eine Gegenmaßnahme (29) einer ersten Stufe eingeleitet wird, und wobei bei Erreichen eines zweiten Grenzwerts (42) zumindest eine Gegenmaßnahme (29) einer zweiten Stufe eingeleitet wird.

20. Verfahren nach einem der Ansprüche 16 bis 19, **dadurch gekennzeichnet, dass** als zumindest eine Gegenmaßnahme (29) der ersten Stufe (27), aus der Gruppe:
- Erhöhung der Klemmkraft (7) der Greifbacken (5) und/oder
- Verlangsamen einer Verfahrgeschwindikeit (30) der Greifvorrichtung (1);
- Aktivstellung (19) des Sicherungsmittels (17);
- Auslösen eines ersten optischen Warnsignals;
- Auslösen eines ersten akustischen Warnsignals;
- Absenken des bewegten Objekts (2) in Vertikalrichtung; eingeleitet wird.

21. Verfahren nach einem der Ansprüche 16 bis 20, **dadurch gekennzeichnet, dass** als zumindest eine Gegenmaßnahme (29) der zweiten Stufe (28), aus der Gruppe:
- Stoppen der Bewegung der Greifvorrichtung (1);
- Auslösen eines ersten oder zweiten, vom ersten unterschiedlichen, optischen Warnsignals;
- Auslösen eines ersten oder zweiten, vom ersten unterschiedlichen, akustischen Warnsignals; eingeleitet wird.

22. Verfahren nach einem der Ansprüche 20 oder 21, **dadurch gekennzeichnet, dass** bei Aktivstellung (19) des zumindest einen Sicherungsmittels (17) schlagartig die Klemmkraft (7) derart erhöht wird, dass die auf den Reibbelag wirkende Federkraft (44) überwunden wird, wodurch der Reibbelag (22) aus seiner Ruhestellung (18) bewegt wird und das zumindest eine Sicherungsmittels (17) schlagartig relativ zum Reibbelag (22) hervortritt und mit zumindest Teilen der Objektoberfläche (2) unter Aufbringung einer zusätzlichen Sicherungskraft (20) in Kontakt gebracht wird.

23. Verfahren nach Anspruch 22, **dadurch gekennzeichnet, dass** das zumindest eine Sicherungsmittel (17) in zumindest Teile der Objektoberfläche (2) zumindest teilweise eindringt, wodurch eine plastische Deformation von Teilen der Objektoberfläche (2) eintritt.

24. Verfahren nach einem der Ansprüche 16 bis 23, **dadurch gekennzeichnet, dass** zumindest ein zweites Sensorelement (8) zur Erfassung der Objektdaten (31) verwendet wird.

25. Verfahren nach einem der Ansprüche 16 bis 24, **dadurch gekennzeichnet, dass** während eines Betriebs der Greifvorrichtung (1) eine Erfassung eines möglichen Fremdkörpers in einem vorgebbaren Warnbereich (32) und ein Stoppbereich (33) von einem, mit der Anlagensteuerung (3) verbundenen, laseroptischen Sicherheitsscanner (39) erfolgt.

26. Verfahren nach Anspruch 25, **dadurch gekennzeichnet, dass** bei einer Erfassung eines Fremdkörpers im Warnbereich (32) die Gegenmaßnahmen (29) erster Stufe (27) eingeleitet werden

27. Verfahren nach einem der Ansprüche 25 oder 26, **dadurch gekennzeichnet, dass** bei einer Erfassung eines Fremdkörpers im Stoppbereich (33) die Gegenmaßnahmen (29) zweiter Stufe (28) eingeleitet werden.

28. Verfahren nach einem der Ansprüche 16 bis 27, **dadurch gekennzeichnet, dass** sich der Manipulator (23) zur Erhöhung seines Bewegungsbereiches (24) während der Bewegung des Objekts (2) entlang einer Verfahrstrecke (25) bewegt.

## Claims

1. A gripping device (1) for the monitored movement of objects (2), preferably sheet metals, comprising
a system control (3) configured for processing object data (31) and controlling a gripping module (4),
wherein the gripping module (4) has at least two gripping jaws (5) formed to cooperate with one another,
which gripping jaws (5) form an intermediate receiving space (6) for receiving at least parts of an object (2) to be monitored and transported,
and the gripping jaws (5) are formed such that, by applying a pre-definable clamping force (7), at least a friction-type connection between the gripping jaws (5) and at least parts of the object (2) is made possible, whereby the object (2) is movable, as well as at least one sensor element (8) for collecting object data (31) of the object (2) to be moved and monitored,
wherein the at least one sensor element (8) is arranged on at least one gripping jaw (5) with its sensor region (9) facing the receiving space (6), and is formed such that it detects, by means of at least temporary collection of the object data (31), a relative movement and/or relative velocity (26) of the object (2) with respect to at least one of the gripping jaws (5),
wherein a friction lining (22) is arranged on at least one inner surface (10) facing the receiving space (6) of at least one gripping jaw (5) for increasing the friction of the gripping jaw (5) to at least parts of the object surface (2),
**characterized in that** at least one gripping jaw (5) comprises at least one securing means (17) formed thereon, and the friction lining (22) is formed in the direction of the clamping force (7), between a rest position (18) and an active position (19), to be movable and preloaded with a spring force (44),
wherein, in the rest position (18), the friction lining (22) is arranged to protrude beyond the securing means (17),
and, in the active position (19), the friction lining (22) is arranged offset back relative to the securing means (17) for applying an at least punctiform securing force (20) to at least parts of an object surface (2).

2. The gripping device (1) according to claim 1, **characterized in that** the sensor element (8) is configured to at least periodically collect a position and/or a location of the object (2) as object data (31).

3. The gripping device (1) according to claim 1 or 2, **characterized in that** the sensor element (8) is formed to be at least an optoelectronic, preferably laser optic and/or acoustic and/or capacitive and/or inductive sensor element (8).

4. The gripping device (1) according to one of the preceding claims, **characterized in that** two sensor elements (8) are arranged to be connected with the system control (3) in a signal-based redundancy.

5. The gripping device (1) according to one of the preceding claims, **characterized in that** the inner surfaces (10) of the gripping jaws (5) are formed to be at least partially alignable to be parallel to one another.

6. The gripping device (1) according to claim 5, **characterized in that** at least one gripping jaw (5) is formed to be rotatable about a clamp axis (11) and has at least one angle correction means (16) for increasing the clamping force on the object to be gripped.

7. The gripping device (1) according to claim 6, **characterized in that** the gripping device (1) is formed to be a pincer gripper (12) which preferably has two gripping jaws (5) and/or pincers (14) rotatable about the clamp axis (11).

8. The gripping device (1) according to claim 5, **characterized in that** at least one gripping jaw (5) is formed to be displaceable in parallel to the second gripping jaw (5).

9. The gripping device (1) according to claim 8, **characterized in that** the gripping device (1) is formed as a plate gripper (13) which has two gripping jaws (5) and/or plates (15) which are movable normal with respect to a clamp axis (11).

10. The gripping device (1) according to one of claims 1 to 9, **characterized in that** the rest position (18) can be taken at a clamping force that is lower relative to the spring force (44),
and the active position (19) can be taken at a clamping force that is higher relative to the spring force (44).

11. The gripping device (1) according to one of the preceding claims, **characterized in that** the at least one securing means (17) for applying the at least punctiform securing force (20) on at least parts of the object surface (2) is formed in the shape of a spike and/or a hook.

12. The gripping device (1) according to one of the preceding claims, **characterized in that** the friction lining (22) is formed to be movable by a hydraulic, pneumatic, mechanical and/or electromechanical spring means.

13. The gripping device (1) according to one of the preceding claims, **characterized in that** the gripping module (4) is formed as a gripping tool of an at least biaxial movable manipulator (23), preferably of a multiaxial robot.

14. The gripping device (1) according to claim 13, **characterized in that** the manipulator (23) is formed to be movable along a travel path (25) for increasing a movement region (24) of the manipulator (23).

15. The gripping device (1) according to one of claims 13 or 14, **characterized in that** the at least biaxially movable manipulator (23) has at least one laser optical safety scanner (39) connected to the system control (3) for detecting a possible foreign body in a pre-definable warning region (32) and a pre-definable stopping region (33).

16. A method for the monitored movement of objects (2), preferably sheet metals, comprising the method steps of:
- providing a gripping device (1) according to one of claims 1 to 15, comprising a gripping module (4), which has at least two gripping jaws (5) formed to cooperate with one another, which gripping jaws (5) form an intermediate receiving space (6) for receiving at least parts of an object (2) to be monitored and transported, and the gripping jaws (5) are formed such that, by applying a pre-definable clamping force (7), at least a friction-type connection between the gripping jaws (5) and at least parts of the object (2) is made possible, whereby the object (2) is movable, and at least one sensor element (8) for collecting object data (2) of the object (2) to be moved and monitored, wherein the at least one sensor element (8) is arranged on at least one gripping jaw (5) with its sensor region (9) facing the receiving space (6), and is configured to detect, by means of at least temporary collection of the object data (2), a relative movement and/or relative velocity (26) of the object (2) with respect to at least one of the gripping jaws (5);
- providing at least the object (2) to be moved;
- gripping the object (2) to be moved by means of gripping jaws (5) of the gripping device (1);
- moving the object (2) according to a pre-definable movement sequence, wherein
-- collecting movement data (40) of the gripping device (1) takes place and
-- at least periodically evaluating the movement data (40) by a system control (3) takes place, and
-- collecting object data (31) of the gripped and moved object (2) by means of at least one sensor element (8) takes place, and
-- at least periodically evaluating the object data (2) takes place in the system control (3); and
-- at least periodically comparing the object data (2) with the movement data (40) is used for detecting a potential deviation which corresponds to a relative movement and/or relative velocity (26) of the object (2) to be moved relative to at least one of the gripping jaws (5), and wherein
--- no deviation corresponds to a normal operation and the predefined movement sequence is terminated; or
--- in the event of a detected deviation, an initiation of at least one, preferably multiple, countermeasure(s) (29) takes place via the system control (3).

17. The method according to claim 16, **characterized in that** the position and/or location of the object (2) is collected at least periodically by the sensor element (8) as object data (2).

18. The method according to claim 16 or 17, **characterized in that** the sensor element (8) determines the object data (2) at least optoelectronically, preferably laser optically and/or acoustically and/or capacitively and/or inductively.

19. The method according to one of claims 16 to 18, **characterized in that** the initiation of the at least one countermeasure (29) takes place in two stages dependent on the extent of the relative velocity (26), wherein at least one countermeasure (29) of a first stage is initiated upon reaching a first threshold value (41), and wherein at least one countermeasure (29) of a second stage is initiated upon reaching a second threshold value (42).

20. The method according to one of claims 16 to 19, **characterized in that**, as at least one countermeasure (29) of the first stage (27), from the group:
- increasing the clamping force (7) of the gripping jaws (5), and/or
- decelerating a travel velocity (30) of the gripping device (1);
- active position (19) of the securing means (17);
- triggering a first optical warning signal;
- triggering a first acoustic warning signal;
- lowering the moved object (2) in the vertical direction; is initiated.

21. The method according to one of claims 16 to 20, **characterized in that**, as at least one countermeasure (29) of the second stage (28), from the group:
- stopping the movement of the gripping device (1);
- triggering a first or second - different from the first - optical warning signal;
- triggering a first or second - different from the first - acoustic warning signal; is initiated.

22. The method according to one of claims 20 or 21, **characterized in that**, in the active position (19) of the at least one securing means (17), the clamping force (7) is abruptly increased such that the spring force (44) acting on the friction lining is overcome, such that the friction lining (22) is moved out of its rest position (18) and the at least one securing means (17) protrudes abruptly relative to the friction lining (22) and is brought into contact with at least parts of the object surface (2), applying an additional securing force (20).

23. The method according to claim 22, **characterized in that** the at least one securing means (2) at least partially penetrates in at least parts of the object surface (17), whereby a plastic deformation of parts of the object surface (2) occurs.

24. The method according to one of claims 16 to 23, **characterized in that** at least one second sensor element (8) for collecting object data (31) is used.

25. The method according to one of claims 16 to 24, **characterized in that**, during an operation of the gripping device (1), a detection of a possible foreign object in a pre-definable warning region (32) and a stopping region (33) is carried out by a laser optical safety scanner (39) connected to the system control (3).

26. The method according to claim 25, **characterized in that**, upon a detection of a foreign body in the warning region (32), the countermeasures (29) of the first stage (27) are initiated.

27. The method according to one of claims 25 or 26, **characterized in that**, upon a detection of a foreign body in the stopping region (33), the countermeasures (29) of the second stage (28) are initiated.

28. The method according to one of claims 16 to 27, **characterized in that** the manipulator (23), in order to increase its movement region (24), moves along a travel path (25) during the movement of the object (2).

## Revendications

1. Dispositif de préhension (1) pour le déplacement surveillé d'objets (2), de préférence de tôles, comprenant
un contrôle d'installation (3), qui est conçu pour le traitement de données d'objets (31) et le contrôle d'un module de préhension (4),
dans lequel le module de préhension (4) comprend au moins deux mâchoires de préhension (5) conçues de façon à coopérer entre elles,
qui forment entre elles un espace de logement (6) pour le logement au moins de parties d'un objet (2) à surveiller et à transporter,
et les mâchoires de préhension (5) sont conçues de façon à ce que, grâce à l'application d'une force de serrage (7) prédéterminée, une liaison par friction entre les mâchoires de préhension (5) et au moins des parties de l'objet (2) est possible, ce qui permet de déplacer l'objet (2), ainsi qu'au moins un élément de capteur (8) pour la détection des données d'objet (31) de l'objet (2) à déplacer et à surveiller,
dans lequel l'au moins un élément de capteur (8) est disposé sur au moins une mâchoire de préhension (5) avec sa zone de capteur (9) orientée vers l'espace de logement (6) et conçu de façon à détecter, par une détection au moins en deux parties des données d'objet (31), un déplacement relatif et/ou une vitesse relative (26) de l'objet (2) par rapport à au moins une des mâchoires de préhension (5),
dans lequel, sur au moins une surface interne (10), orientée vers l'espace de logement (6), d'au moins une mâchoire de préhension (5), est disposée une garniture de friction (22) permettant d'augmenter la friction de la mâchoire de préhension (5) avec au moins des parties de la surface de l'objet (2),
**caractérisé en ce que**
au moins une mâchoire de préhension (5) comprend au moins un moyen de sécurisation (17) réalisé sur celle-ci et la garniture de friction (22) est mobile dans la direction de la force de serrage (7), entre une position de repos (18) et une position active (19) et est précontrainte avec une force de ressort (44),
dans lequel, dans la position de repos (18), la garniture de friction (22) est disposée de façon à dépasser du moyen de sécurisation (17),
et, dans la position active (19), pour l'application d'une force de sécurisation (20) au moins ponctuelle sur au moins des parties d'une surface de l'objet (2), la garniture de friction (22) est disposée de façon à être en retrait par rapport au moyen de sécurisation (17).

2. Dispositif de préhension (1) selon la revendication 1, **caractérisé en ce que** l'élément de capteur (8) est conçu pour détecter au moins périodiquement une position et/ou une localisation de l'objet (2) en tant que données d'objet (31).

3. Dispositif de préhension (1) selon la revendication 1 ou 2, **caractérisé en ce que** l'élément de capteur (8) est conçu comme un élément de capteur (8) opto-électronique, de préférence à laser et/ou acoustique et/ou capacitif et/ou inductif.

4. Dispositif de préhension (1) selon l'une des revendications précédentes, **caractérisé en ce que** deux éléments de capteur (8) sont disposés de façon à être reliés avec une redondance de signaux avec le contrôle d'installation (3).

5. Dispositif de préhension (1) selon l'une des revendications précédentes, **caractérisé en ce que** les surfaces internes (10) des mâchoires de préhension (5) sont conçues de façon à pouvoir être orientées au moins partiellement parallèlement entre elles.

6. Dispositif de préhension (1) selon la revendication 5, **caractérisé en ce qu'**au moins une mâchoire de préhension (5) est conçue de manière rotative autour d'un axe de serrage (11) et comprend, pour l'augmentation de la force de serrage sur l'objet à saisir, au moins un moyen de correction angulaire (16).

7. Dispositif de préhension (1) selon la revendication 6, **caractérisé en ce que** le dispositif de préhension (1) est conçu comme un préhenseur à pinces (12) qui comprend de préférence deux mâchoires de préhension (5) respectivement pinces (14) rotatives autour de l'axe de serrage (11).

8. Dispositif de préhension (1) selon la revendication 5, **caractérisé en ce qu'**au moins une mâchoire de préhension (5) est conçue de manière coulissante parallèlement à la deuxième mâchoire de préhension (5).

9. Dispositif de préhension (1) selon la revendication 8, **caractérisé en ce que** le dispositif de préhension (1) est conçu comme un préhenseur à plaques (13) qui comprend deux mâchoires de préhension (5) respectivement plaques (15) mobiles perpendiculairement à un axe de serrage (11).

10. Dispositif de préhension (1) selon l'une des revendications 1 à 9, **caractérisé en ce que** la position de repos (18) peut être atteinte dans le cas d'une force de serrage inférieure à la force de ressort (44)
et la position active (19) peut être atteinte dans le cas d'une force de serrage supérieure à la force de ressort (44).

11. Dispositif de préhension (1) selon l'une des revendications précédentes, **caractérisé en ce que** l'au moins un moyen de sécurisation (17) est conçu, pour appliquer la force de sécurisation (20) au moins ponctuelle sur au moins des parties de la surface de l'objet (2), sous la forme d'un mandrin et/ou d'un crochet.

12. Dispositif de préhension (1) selon l'une des revendications précédentes, **caractérisé en ce que** la garniture de friction (22) est constituée d'un moyen de ressort mobile de manière hydraulique, pneumatique, mécanique et/ou électromécanique.

13. Dispositif de préhension (1) selon l'une des revendications précédentes, **caractérisé en ce que** le module de préhension (4) est conçu comme un outil de préhension d'un manipulateur (23) mobile au moins sur deux axes, de préférence d'un robot multiaxial.

14. Dispositif de préhension (1) selon la revendication 13, **caractérisé en ce que** le manipulateur (23) est conçu de manière mobile le long d'un trajet de déplacement (25) pour l'augmentation d'une zone de déplacement (24) du manipulateur (23).

15. Dispositif de préhension (1) selon l'une des revendications 13 ou 14, **caractérisé en ce que** l'au moins un manipulateur (23) mobile sur au moins deux axes comprend au moins un scanner de sécurité à laser (39) relié avec le contrôle d'installation (3), pour la détection d'un corps étranger éventuel dans une zone d'alerte (32) prédéterminée et une zone d'arrêt (33) prédéterminée.

16. Procédé de déplacement surveillé d'objets (2), de préférence de tôles, comprenant les étapes suivantes :
- mise à disposition d'un dispositif de préhension (1) selon l'une des revendications 1 à 15, comprenant un module de préhension (4), qui comprend au moins deux mâchoires de préhension (5) conçues de façon à coopérer entre elles, qui forment entre elles un espace de logement (6) pour le logement au moins de parties d'un objet (2) à surveiller et à transporter, et les mâchoires de préhension (5) sont conçues de façon à ce que, grâce à l'application d'une force de serrage (7) prédéterminée, une liaison par friction entre les mâchoires de préhension (5) et au moins des parties de l'objet (2) est possible, ce qui permet de déplacer l'objet (2), ainsi qu'au moins un élément de capteur (8) pour la détection des données d'objet (2) de l'objet (2) à déplacer et à surveiller, dans lequel l'au moins un élément de capteur (8) est disposé sur au moins une mâchoire de préhension (5) avec sa zone de capteur (9) orientée vers l'espace de logement (6) et conçu de façon à détecter, par une détection au moins en deux parties des données d'objet (2), un déplacement relatif et/ou une vitesse relative (26) de l'objet (2) par rapport à au moins une des mâchoires de préhension (5),
- mise à disposition de l'au moins un objet à déplacer (2) ;
- préhension de l'objet à déplacer (2) au moyen des mâchoires de préhension (5) du dispositif de préhension (1) ;
- déplacement de l'objet (2) en fonction d'un processus de déplacement prédéterminé, dans lequel
- une détection des données de déplacement (40) du dispositif de préhension (1) est effectuée et
- une analyse au moins périodique des données de déplacement (40) est effectuée par un contrôle d'installation ,(3) et
- une détection de données d'objet (31) de l'objet saisi et déplacé (2) est effectuée à l'aide d'au moins un élément de capteur (8) et
- une analyse au moins périodique des données d'objet (2) est effectuée dans le contrôle d'installation (3) ; et
- une comparaison au moins périodique des données d'objet (2) avec les données de déplacement (40) est utilisée pour détecter un éventuel écart correspondant à un déplacement relatif et/ou une vitesse relative (26) de l'objet à déplacer (2) par rapport à au moins une des mâchoires de préhension (5) et dans lequel
- aucun écart ne correspond à un fonctionnement normal et le processus de déplacement prédéterminé est terminé ; ou
- lors de la détection d'un écart, au moins une, de préférence plusieurs contre-mesures (29) sont appliquées par le contrôle d'installation (3).

17. Procédé selon la revendication 16, **caractérisé en ce que**, en tant que données d'objet (2), la position et/ou la localisation de l'objet (2) est détectée au moins périodiquement par l'élément de capteur (8).

18. Procédé selon la revendication 16 ou 17, **caractérisé en ce que** l'élément de capteur (8) détermine les données d'objet (2) de manière au moins opto-électronique, de préférence avec un laser, et/ou de manière acoustique et/ou capacitive et/ou inductive.

19. Procédé selon l'une des revendications 16 à 18, **caractérisé en ce que** l'application de l'au moins une contre-mesure (29) a lieu en deux étapes en fonction de la valeur de la vitesse relative (26), dans lequel, lorsqu'une première valeur limite (41) est atteinte, au moins une contre-mesure (29) d'une première étape est appliquée et dans lequel, lorsqu'une deuxième valeur limite (42) est atteinte, au moins une contre-mesure (29) d'une deuxième étape est appliquée.

20. Procédé selon l'une des revendications 16 à 19, **caractérisé en ce que**, en tant qu'au moins une contre-mesure (29) de la première étape (27), une contre-mesure du groupe suivant :
- augmentation de la force de serrage (7) des mâchoires de préhension (5) et/ou
- ralentissement d'une vitesse de déplacement (30) du dispositif de préhension (1) ;
- position active (19) du moyen de sécurisation (17) ;
- déclenchement d'un premier signal d'alarme optique ;
- déclenchement d'un premier signal d'alarme acoustique ;
- abaissement de l'objet déplacé (2) dans la direction verticale ;
est appliquée.

21. Procédé selon l'une des revendications 16 à 20, **caractérisé en ce que**, en tant qu'au moins une contre-mesure (29) de la deuxième étape (28), une contre-mesure du groupe suivant :
- arrêt du déplacement du dispositif de préhension (1) ;
- déclenchement d'un premier ou deuxième, différent du premier, signal d'alarme optique ;
- déclenchement d'un premier ou deuxième, différent du premier, signal d'alarme acoustique ;
est appliquée.

22. Procédé selon l'une des revendications 20 ou 21, **caractérisé en ce que**, dans le cas d'une position active (19) de l'au moins un moyen de sécurisation (17) la force de serrage (7) est augmentée de manière brusque de façon à ce que la force de ressort (44) agissant sur la garniture de friction soit surmontée, ce qui déplace la garniture de friction (22) hors de sa position de repos (18) et l'au moins un moyen de sécurisation (17) fait brusquement saillie hors de la garniture de friction (22) et est mis en contact avec au moins des parties de la surface de l'objet (2) sous l'effet d'une force de sécurisation (20) supplémentaire.

23. Procédé selon la revendication 22, **caractérisé en ce que** l'au moins un moyen de sécurisation (17) pénètre au moins partiellement dans au moins des parties de la surface de l'objet (2), ce qui permet une déformation plastique de parties de la surface de l'objet (2).

24. Procédé selon l'une des revendications 16 à 23, **caractérisé en ce qu'**au moins un deuxième élément de capteur (8) est utilisé pour la détection des données d'objet (31).

25. Procédé selon l'une des revendications 16 à 24, **caractérisé en ce que**, pendant un fonctionnement du dispositif de préhension (1), a lieu une détection d'un corps étranger éventuel dans une zone d'alarme (32) prédéterminée et une zone d'arrêt (33) par un scanner de sécurité à laser (39) relié avec le contrôle d'installation (3).

26. Procédé selon la revendication 25, **caractérisé en ce que**, lors d'une détection d'un corps étranger dans la zone d'alarme (32), les contre-mesures (29) de première étape (27) sont appliquées.

27. Procédé selon la revendication 25 ou 26, **caractérisé en ce que**, lors d'une détection d'un corps étranger dans la zone d'arrêt (33), les contre-mesures (29) de la deuxième étape (28) sont appliquées.

28. Procédé selon l'une des revendications 16 à 27, **caractérisé en ce que** le manipulateur (23) se déplace, pour l'augmentation de sa zone de déplacement (24) pendant le déplacement de l'objet (2), le long d'un trajet de déplacement (25).
